(19) Europäisches Patentamt
European Patent Office
Office européen des brevets

(11) Veröffentlichungsnummer: **0 182 069**
**B1**

(12) # EUROPÄISCHE PATENTSCHRIFT

(45) Veröffentlichungstag der Patentschrift: **31.08.88**

(21) Anmeldenummer: **85112771.2**

(22) Anmeldetag: **09.10.85**

(51) Int. Cl.⁴: **C 08 G 18/78**, C 08 G 18/08, C 08 G 18/28, C 08 G 18/38, D 21 H 3/48, C 09 D 3/72, C 08 G 18/48

(54) **Wässrige Lösungen oder Dispersionen von Polyisocyanat-Additionsprodukten, ein Verfahren zu ihrer Herstellung, sowie ihre Verwendung als Beschichtungsmittel oder als Leimungsmittel für Papier.**

(30) Priorität: **20.10.84 DE 3438563**

(43) Veröffentlichungstag der Anmeldung: **28.05.86 Patentblatt 86/22**

(45) Bekanntmachung des Hinweises auf die Patenterteilung: **31.08.88 Patentblatt 88/35**

(84) Benannte Vertragsstaaten: **CH DE FR GB LI SE**

(56) Entgegenhaltungen:
**DE-C-1 230 778**
**FR-A-2 280 662**
**FR-A-2 317 317**
**FR-A-2 317 318**
**FR-A-2 325 668**
**FR-A-2 385 756**

(73) Patentinhaber: **BAYER AG, Konzernverwaltung RP Patentabteilung, D-5090 Leverkusen 1 Bayerwerk (DE)**

(72) Erfinder: **Henning, Wolfgang, Dr., Zur Linde 27, D-5067 Kuerten (DE)**
Erfinder: **Meckel, Walter, Dr., Zonser Strasse 9, D-4040 Neuss (DE)**
Erfinder: **Beck, Ulrich, Dr., Weiher Strasse 17, D-5303 Bornheim 3 (DE)**
Erfinder: **Bäumgen, Heinz, Buchenweg 10, D-5090 Leverkusen 1 (DE)**

**EP 0 182 069 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft neue Lösungen oder Dispersionen von eingebaute Acylharnstoffgruppen aufweisenden, anionisch und gegebenenfalls nicht-ionisch-hydrophil modifizierten Polyisocyanat-Additionsprodukten, ein Verfahren zu ihrer Herstellung, sowie ihre Verwendung als Beschichtungsmittel für flexible oder nicht-flexible Substrate bzw. als Leimungsmittel für Papier.

Verfahren zur Herstellung von ionisch modifizierten Polyurethanen sind bekannt und werden beispielsweise in folgenden Literaturstellen beschrieben:

DE-PS 880 485, DE-AS 1 044 404, US-PS 3 036 998, DE-PS 1 178 586, DE-PS 1 184 946, DE-AS 1 237 306, DE-AS 1 495 745, DE-OS 1 595 602, DE-OS 1 770 068, DE-OS 2 019 324, DE-OS 2 035 732, DE-OS 2 446 440, DE-OS 2 345 256, DE-OS 2 345 245, DE-OS 2 427 274, US-PS 3 479 310 und Angewandte Chemie 82, 53 (1970) und Angew. Makromol. Chem. 26, 85 ff (1972).

Die wäßrigen Dispersionen der genannten Polyurethane können in einem weiten Bereich von Anwendungen eingesetzt werden, wie z. B. als Klebstoffe oder zur Beschichtung verschiedener flexibler oder nicht-flexibler Substrate.

Trotz der Vielzahl der bekannten Verfahren und der daraus gewonnenen Produkte besteht doch immer wieder der Wunsch nach wäßrigen Dispersionen mit ganz bestimmten Eigenschaften.

Mit dem nachfolgend näher beschriebenen Verfahren wird eine Möglichkeit aufgezeigt, auf einfache Weise durch Wahl eines über eine Acylharnstoffgruppe gebundenen organischen Substituenten das Eigenschaftsbild der Produkte in einem weiten Rahmen gezielt zu verändern.

Die Herstellung von Acylharnstoffgruppen aufweisenden Isocyanatpolyadditionsprodukten ist an sich bekannt und wurde beispielsweise in DE-OS-2 436 740 oder DE-OS-2 714 293 beschrieben. Gemäß diesen bekannten Verfahren werden die Produkte entweder in gelöster Form hergestellt und unter Filmbildung in Beschichtungen, Lacküberzüge oder Folien überführt (DE-OS-2 436 740), oder man stellt zunächst Acylharnstoffgruppen aufweisende Polyhydroxylverbindungen her, die dann in Acylharnstoffgruppen aufweisende Schaumstoffe überführt werden können (DE-OS-2 714 293). Es war dennoch nicht vorhersehbar, daß dieses Prinzip auch auf die Chemie der wäßrigen Polyurethandispersionen übertragbar ist, und insbesondere, daß die nachstehend näher beschriebenen, erfindungsgemäßen Dispersionen von Polyurethanen mit über Acylharnstoffgruppen gebundenen hydrophoben Seitenketten bezüglich ihrer Eignung als Papierleimungsmittel beispielsweise den an sich guten Produkten der DE-OS-2 457 972 bzw. DE-OS-2 400 490 zumindest ebenbürtig sein würden. Insbesondere die nachstehend näherbeschriebenen Dispersionen oder Lösungen von Carboxylatgruppen und hydrophobe Seitenketten aufweisenden Polyurethanen sind den Papierleimungsmitteln der zuletzt genannten Vorveröffentlichungen wegen ihrer verringerten Neigung zur Schaumbildung in der Flotte und bezüglich ihrer Verwendbarkeit sowohl für alaunfreie als auch für alaunhaltige oder vorgeleimte oder holzhaltige Papiere überlegen.

Gegenstand der Erfindung sind wäßrige Lösungen oder Dispersionen von Polyisocyanat-Additionsprodukten, die einen ihre Löslichkeit oder Dispergierbarkeit in Wasser gewährleistenden Gehalt an eingebauten Sulfonat- und/oder Carboxylatgruppen, sowie gegebenenfalls an eingebauten, innerhalb einer Polyetherkette vorliegenden Ethylenoxideinheiten $-CH_2-CH_2-O$ aufweisen, wobei der Gehalt an Sulfonat- und/oder Carboxylatgruppen bei 2 bis 300 Milliäquivalenten pro 100 g Feststoff und der Gehalt an den genannten Ethylenoxideinheiten bei 0 bis 25 Gew.-%, bezogen auf Feststoff liegt, dadurch gekennzeichnet, daß die Polyisocyanat-Additionsprodukte innerhalb der Polymerkette eingebaute segmente der allgemeinen Formel

$$-NH-CO-\underset{|}{N}-CO-R$$

aufweisen, wobei

R einen gesättigten oder ungesättigten aliphatischen Kohlenwasserstoffrest mit bis zu 35 Kohlenstoffatomen, vorzugsweise mit 9 bis 22 Kohlenstoffatomen, einen aromatischen Kohlenwasserstoffrest mit 6 bis 10 Kohlenstoffatomen, einen araliphatischen Kohlenwasserstoffrest mit 7 bis 10 Kohlenstoffatomen, Chlormethyl, 4-Dimethylaminophenyl oder einen Rest L-M- bezeichnet, bei dem -M- für eine Einfachbindung, $-CH_2-$, $CH_2-CH_2-$, $-CH=CH-$

oder 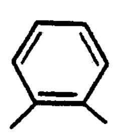 steht und L eine Estergruppe $T-\underset{\underset{O}{\|}}{C}-$

eines einwertigen Alkohols und Z = Aminrest, oder wobei, bei Vorliegen von mehreren Reste R im gleichen Molekül gleichzeitig unterschiedliche, der genannten Definition entsprechende Reste R vorliegen

können,

wobei die Gesamtmenge der eingebauten acylierten Harnstoffgruppen der genannten Formel einen Gehalt des Polyisocyanat-Additionsprodukts an Struktureinheiten der Formel

$$-NH-CO-\underset{|}{N}-CO-$$

von 0,1 bis 20 Gew.-%, bezogen auf reststoff, entspricht.

Gegenstand der Erfindung ist auch ein Verfahren zur Herstellung dieser Lösungen oder Dispersionen durch Umsetzung von

a) organischen Polyisocyanaten, gegebenfalls unter Mitverwendung von organischen Monoisocyanaten, mit

b) gegenüber Isocyanatgruppen reaktionsfähige Gruppen aufweisenden Verbindungen, gegebenenfalls unter Mitverwendung bzw. in Anwesenheit von

c) Hilfs- und Zusatzmitteln,

wobei als Aufbaukomponenten a), b) und/oder c) Sulfonat-und/oder Carboxylatgruppen oder in derartige Gruppen überführbare Gruppen aufweisende Aufbaukomponenten mitverwendet werden, wobei die zumindest teilweise Überführung in Salzgruppen der genannten Art während oder anschließend an die Polyadditionsreaktion erfolgt, und gegebenenfalls unter Mitverwendung von Aufbaukomponenten a) und/oder b), welche innerhalb einer Polyetherkette vorliegende Ethylenoxideinheiten aufweisen, wobei die Gesamtmenge derartiger hydrophiler Aufbaukomponenten so bemessen wird, daß in dem Polyisocyanat-Polyadditionsprodukt eine die Löslichkeit oder Dispergierbarkeit in Wasser gewährleistende Menge an Carboxylat- und/oder Sulfonatgruppen von 2 bis 300 Milliäquivalenten pro 100 g Feststoff und gegebenenfalls an Ethylenoxideinheiten der genannten Art von 0 bis 25 Gew.-% vorliegt, und Überführung des so hergestellten Polyisocyanatadditionsprodukts in eine wäßrige Lösung oder Dispersion während oder im Anschluß an die Additionsreaktion, dadurch gekennzeichnet, daß man als Aufbaukomponenten a) und/oder b) zumindest anteilig Acylharnstoffgruppen der Formel

$$-NH-CO-\underset{|}{N}-CO-R$$

aufweisende Verbindungen (mit) verwendet, deren Menge so bemessen wird, daß in dem Polyisocyanat-Additionsprodukt 0,1 bis 20 Gew.-%, bezogen auf Feststoff, an Acylharnstoffgruppen bildenden Struktureinheiten der Formel

$$-NH-CO-\underset{|}{N}-CO-$$

vorliegen.

Gegenstand der Erfindung ist schließlich auch die Verwendung der erfindungsgemäßen Lösungen oder Dispersionen als Beschichtungsmittel für flexible oder nicht-flexible Substrate, sowie als Leimungsmittel für Papier, bzw. zur Herstellung von Leimungsmitteln für Papier.

Bei der Herstellung der erfindungsgemäßen Dispersionen kommen a) organische Polyisocyanate, gegebenenfalls unter Mitverwendung von monofunktionellen Isocyanaten, b) Verbindungen mit mindestens zwei gegenüber Isocyanatgruppen reaktionsfähigen Gruppen, gegebenenfalls unter Mitverwendung von entsprechenden monofunktionellen Verbindungen und gegebenenfalls c) weitere Hilfs- und Zusatzmittel zum Einsatz.

Geeignete Aufbaukomponenten a) sind beispielsweise

a1) Diisocyanate der Formel $Q(NCO)_2$, wobei Q einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanato-cyclohexan, 1-Isocyanato-3-3,5-trimethyl-5-isocyamatomethylcyclohexan, 4,4'-Diisocyanatodicyclo-hexylmethan, 4,4'-Diisocyanato-dicyclohexyl-propan-(2,2), 1,4-Diisocyanatobenzol, 2,4-Diisocyanato-toluol, 2,6-Diisocyanatotoluol, 4,4'Diisocyanatodiphenylmethan, 4,4'-Diisocyanato-diphenylpropan-(2,2), p-Xylylen-diisocyanat oder α,α,α',α'-Tetramethyl-m- oder p-xylylen-diisocyanat, sowie aus diesen Verbindungen bestehende Gemische.

Zu den erfindungsgemäß geeigneten Aufbaukomponenten a) gehören auch beispielsweise

a2) die aus der Polyurethanchemie an sich bekannten, NCO-Gruppen aufweisenden Prepolymere, wie sie durch Umsetzung von einfachen Diisocyanaten der unter a1) beispielhaft genannten Art mit organischen Polyhydroxylverbindungen der nachstehend unter b1) beispielhaft genannten Art unter Einhaltung eines NCO/OH-Äquivalentverhältnisses von beispielsweise 1,2 : 1 bis 10 : 1, vorzugsweise 1,5 : 1 bis 2,5 : 1 erhalten werden können. Aus dem genannten Äquivalentverhältnis ist ersichtlich, daß unter "NCO-Prepolymeren" im Rahmen der Erfindung auch die sogenannten "Semiprepolymeren" zu verstehen sind, d. h. Gemische von überschüssigen, nicht umgesetzten Diisocyanaten mit echten NCO-Prepolymeren.

Zu den erfindungsgemäß geeigneten Aufbaukomponenten a) gehören außerdem beispielsweise
a3) Acylharnstoffgruppen der allgemeinen Formel

-NH-CO-N-CO-R
          |

aufweisende Polyisocyanate. In dieser Formel hat R die bereits obengenannte Bedeutung.

Es ist grundsätzlich möglich, als Komponene a3) Polyisocyanate einzusetzen, die mehrere derartige Acylharnstoffgruppen aufweisen, wobei die einzelnen Reste R der genannten Definition entsprechen, jedoch voneinander verschieden sein können.

Bei den Acylharnstoffgruppen aufweisenden Polyisocyanaten a3) kann es sich sowohl um vergleichsweise niedermolekulare als auch um höhermolekulare NCO-Prepolymere handeln. Die Herstellung der Aulfbaukomponenten a3) erfolgt in Analogie zur Lehre der DE-OS 2 436 741 durch partielle Carbodiimidisierung der Isocyanatgruppen von organischen Polyisocyanaten der oben unter a1) und a2) beispielhaft genannten Art und Anlagerung von organischen Carbonsäuren R-COOH an die so hergestellten, Carbodiimidmodifizierten Polyisocyanate. Typische Beispiele geeigneter Aufbaukomponenten a3) sind beispielsweise Diisocyanate der allgemeinen Formel

$$OCN-(R^1-NH-CO-\underset{\substack{|\\C=O\\|\\R}}{N})_m-R^1-NCO$$

die in der Weise hergestellt werden, daß man in einer ersten Stufe Carbodiimidgruppen von Diisocyanatocarbodiimiden der allgemeinen Formel

$$OCN(R^1-N=C=N)_m-R^1-NCO$$

vollständig oder teilweise mit Carbonsäuren der allgemeinen Formel

$$R-COOH$$

gegebenenfalls in Gegenwart eines geeigneten Lösungsmittels bei Temperaturen von 25 bis 100°C reagieren läßt.

In diesen Formeln stehen

R für einen Rest der bereits oben bei der Definition von R genannten Art,

$R^1$ für einen zweiwertigen, gegebenenfalls Urethan-, Ester- und/oder Ethergruppen aufweisenden Kohlenwasserstoffrest, wie er durch Entfernung der endständigen Isocyanatgruppen aus einem einfachen organischen Diisocyanat oder einem Urethangruppen und gegebenenfalls Ether- oder Estergruppen aufweisenden NCO-Prepolymer erhalten wird, wobei bei Vorliegen von mehreren Resten $R^1$ im gleichen Molekül gleichzeitig auch unterschiedliche, der genannten Definition entsprechende Reste $R^1$ vorliegen können, und

m für eine ganze oder (im statistischen Mittel) gebrochene Zahl von 1 bis 10, vorzugsweise von 1 bis 4.

Die Herstellung der Diisocyanatocarbodiimide ist an sich bekannt und wird z. B. in den US-Patentschriften 2 840 589 und 2 941 966 sowie von P.W. Campbell und KG. Smeltz in Journal of Organic Chemistry, 28, 2069 (1963) beschrieben. Besonders schonend und frei von Nebenprodukten lassen sich Diisocyanatocarbodiimide auch durch eine Heterogenkatalyse gemäß den deutschen Offenlegungsschriften 2 504 400 und 2 552 350 herstellen. Die Carbodiimidisierung von Diisocyanaten in Gegenwart sehr geringer Mengen an Phospholinoxid unter

anschließender Blockierung des Katalysators mit Säurechloriden wird in der DE-OS 2 653 120 beschrieben.

Als Aufbaukomponente für die Carbodiimidgruppen aufweisenden Diisocyanate werden bevorzugt aromatische Diisocyanate der oben unter a1) beispielhaft genannten Art eingesetzt.

Geeignete Carbonsäuren der Formel R-COOH sind beispielsweise Essigsäure, Propionsäure, Hexancarbonsäure, Laurinsäure, Palmitinsäure, Stearinsäure, Benzoesäure, Phenylessigsäure, Acrylsäure, Methacrylsäure, Crotonsäure, 10-Undecensäur, Ölsäure, Linolsäure, Chloressigsäure, Cyclohexancarbonsäure, Abietinsäure, 4-Di-methylaminobenzoesäure oder auch Monoester oder Monoamide von Dicarbonsäuren wie Oxalsäure, Malonsäure, Bernsteinsäure, Maleinscäure, Fumarsäure oder Phthalsäure mit einwertigen Alkoholen oder Aminen. Die Verwendung der beginnend mit Chloressigsäure genannten speziellen Monocarbonsäuren ist lediglich aus preislichen Gründen weniger bevorzugt. Grundsätzlich können beim erfindungsgemäßen Verfahren auch beliebige Gemische der beispielhaft genannten Säuren der allgemeinen Formel R-COOH eingesetzt werden. Die Menge der eingesetzten Säure wird so bemessen, daß pro Mol Carbodiimidgruppen 0,2 bis 1,2, vorzugsweise 0,5 bis 1,2 Mol an Carboxylgruppen im Reaktionsgemisch vorliegen.

Die Herstellung der ebenfalls als Aufbaukomponente a3) geeigneten, Acylharnstoffgruppen aufweisenden NCO-Prepolymeren kann beispielsweise entweder durch Umsetzung der bereits genannten, Acylharnstoffgruppen aufweisenden Polyisocyanate auf Basis niedermolekularer Diisocyanate mit unterschüssigen Mengen an Polyhydroxylverbindungen der nachstehend unter b1) und/oder b2) beispielhaft genannten Art oder durch partielle Carbodiimidisierung von NCO-Prepolymeren der oben unter a2) beispielhaft genannten Art und anschließender Umsetzung der Carbodiimidisierungsprodukte mit Carbonsäuren R-COOH in Analogie zu den obengemachten Ausführungen erfolgen.

Weitere mögliche Aufbaukomponenten a) für das erfindungsgemäße Verfahren sind auch beispielsweise

a4) hydrophil modifizierte Polyisocyanate, beispielsweise seitenständige Polyetherketten mit eingebauten Ethylenoxideinheiten aufweisende Diisocyanate gemäß Us-PS-3 920 598 oder sulfonierte Diisocyanate der beispielsweise in DE-OS-2 227 111 bzw. DE-OS 2 359 615 genannten Art. Die Mitverwendung derartiger, hydrophil modifizierter Polyisocyanate ist jedoch weniger bevorzugt, da die hydrophilen Gruppen beim erfindungsgemäßen Verfahren vorzugsweise über die nachstehend näherbeschriebene Aufbaukomponente b) eingebaut werden.

Grundsätzlich ist es auch möglich, beim erfindungsgemäßen Verfahren die beispielhaft genannten Aufbaukomponenten a1) bis a4) in Kombination mit höherfunktionellen niedermolekularen Polyisocyanaten wie beispielsweise dem Umsetzungsprodukt von 3 Mol 2,4-Diisocyanatotoluol mit einem Mol Trimethylolpropan und/oder in Kombination mit monofunktionellen Isocyanaten wie Phenylisocyanat, Hexylisocyanat oder n-Dodecylisocyanat einzusetzen. Auch der Einsatz von monofunktionellen, Polyetherketten mit eingebauten Ethylenoxideinheiten aufweisenden Isocyanaten der beispielsweise in den US-Patentschriften 3 920 598 bzw. 4 237 264 genannten Art ist prinzipiell möglich. Bei Verwendung derartiger monofunktioneller Isocyanate ist jedoch im allgemeinen, insbesondere bei der Herstellung von hochmolekularen Polyurethanen, durch gleichzeitige Mitverwendung von höher als difunktionellen Aufbaukomponenten ein vorzeitiger Kettenabbruch zu verhindern. Vorzugsweise werden beim erfindungsgemäßen Verfahren difunktionelle Isocyanate der oben beispielhaft genannten Art als Aufbaukomponente a) verwendet.

Für das erfindungsgemäße Verfahren geeignete Aufbaukomponenten b) sind beispielsweise

b1) die aus der Polyurethanchemie bekannten Polyhydroxypolyester oder -polyether des Molekulargewichtsbereichs 400 bis 4000, vorzugsweise die entsprechenden difunktionellen Verbindungen, wie sie in an sich bekannter Weise durch Umsetzung von mehrbasischen Säuren, insbesondere difunktionellen Säuren wie z. B. Adipinsäure, Phthalsäure, Tetrahydrophthalsäure und/oder Hexahydrophthalsäure mit überschüssigen Mengen an mehrwertigen Alkoholen, vorzugsweise zweiwertigen Alkoholen der nachstehend unter b2) beispielhaft genannten Art bzw. durch Alkoxylierung geeigneter Startermoleküle wie z. B. Wasser, Ammoniak, Anilin oder den nachstehend unter b2) beispielhaft genannten mehrwertigen Alkoholen mit Alkylenoxiden wie z. B. Ethylenoxid und/oder Propylenoxid zugänglich sind.

Für das erfindungsgemäße Verfahren geeignete Aufbaukomponenten b) sind weiterhin beispielsweise

b2) mehrwertige Alkohole, insbesondere zweiwertige Alkohole des Molekulargewichtsbereichs 62 bis 399, insbesondere die entsprechenden Alkanpolyole wie z. B. Ethylenglykol, Propylenglykol, Hexamethylendiol, Glycerin, Trimethylolpropan oder Trimethylolethan oder auch niedermolekulare, Ethergruppen aufweisende Alkohole wie z. B. Diethylenglykol, Triethylenglykol, Dipropylenglykol oder Tripropylenglykol. Beliebige Gemische derartiger Alkohole können ebenfalls beim erfindungsgemäßen Verfahren eingesetzt werden.

Für das erfindungsgemäße Verfahren geeignete Aufbaukomponenten b) sind weiterhin beispielsweise

b3) mindestens zwei aminische oder hydrazinische Aminogruppen aufweisende Verbindungen des Molekulargewichtsbereichs 32 bis 400 wie z. B. Ethylendiamin, Hexamethylendiamin, Isophorondiamin, 2,4-Diaminotoluol, 4,4'-Diaminodiphenylmethan, 4,4'-Diamino-dicyclohexylmethan, Diethylentriamin,

Triethylentetramin, Hydrazin bzw. Hydrazinhydrat. Derartige Aufbaukomponenten können auch in blockierter Form, d. h. insbesondere in Form der entsprechenden Ketimine bzw. Ketazine (Umsetzungsprodukte mit einfachen Ketonen wie Aceton) Methylethylketon oder Methylisobutylketon) eingesetzt werden. Bei Verwendung derartiger blockierter Kettenverlängerungsmittel erfolgt erst unter dem hydrolytischen Einfluß des Dispergierwassers eine Freisetzung der mit Isocyanatgruppen reaktionsfähigen Gruppen.

Weitere als Aufbaukomponente b) geeignete Verbindungen sind beispielsweise

b4) ionische Aufbaukomponenten oder potentielle ionische Aufbaukomponenten, die neben zwei gegenüber Isocyanatgruppen reaktionsfähigen Gruppen mindestens eine Carboxyl-, Carboxylat-, Sulfonsäure- und oder Sulfonatgruppe aufweisen. Hierzu gehören beispielsweise die Sulfonatgruppen aufweisenden aliphatischen Diole gemäß DE-OS-2 446 440 oder DE-OS-2 437 218, Carboxylatgruppen oder in Carboxylatgruppen überführbare Carboxylgruppen aufweisenden Diole und/ oder Diaminosulfonate der in CA-PS 928 323 beschriebenen Art, wie z. B. das Natriumsalz der N- (2-Aminoethyl)-2-aminoethansulfonsäure.

Zu den besonders bevorzugten ionischen Aufbaukomponenten b4) gehören Sulfonatdiole der allgemeinen Formel

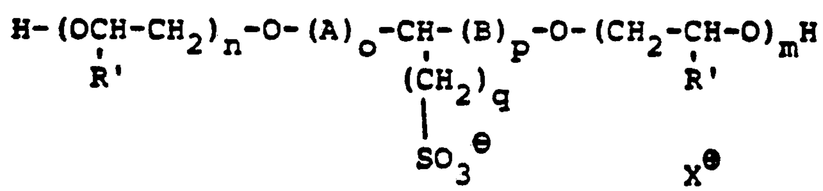

wobei

A und B für gleiche oder verschiedene zweiwertige aliphatische Kohlenwasserstoffreste mit 1 bis 6 Kohlenstoffatomen stehen,

R' für Wasserstoff, einen aliphatischen Kohlenwasserstoffrest mit 1 bis 4 Kohlenstoffatomen oder einen Phenylrest steht,

$X^{\oplus}$ für ein Alkalimetallkation oder eine gegebenenfalls substituierte Ammoniumgruppe steht,

n und m für gleiche oder verschiedene Zahlen von 0 bis 30 stehen,

o und p für jeweils 0 oder 1 stehen und

q für eine ganze Zahl von 0 bis 2 steht.

Zu den bevorzugten Aufbaukomponenten b4) mit Carboxylatgruppen oder in Carboxylatgruppen überführbaren Gruppen gehören Hydroxycarbonsäuren der allgemeinen Formel

$$(HO)_x\text{-}Q(COOH)_y$$

worin

Q für einen linearen oder verzweigten Kohlenwasserstoffrest mit 1 bis 12 Kohlenstoffatomen steht und

x und y jeweils für ganze Zahlen von 1 bis 3 stehen, wobei die Summe x + y den Wert von 2 bis 4 ergibt.

Zu den besonders bevorzugten Aufbaukomponenten b4) der zuletzt genannten Formel gehören solche Säuren, in welchen x für 2 und y für 1 steht, wie sie beispielhaft in US-PS-3 412 054 beschrieben sind. Die α,α-Dimethylolpropionsäure bzw. deren Salze mit tertiären Aminen wie z. B. Trimethylamin, Triethylamin, N-Methylmorpholin, N-Ethylmorpholin, N-Methylpiperazin, N,N-Dimethylethanolamin oder N-Methyldiethanolamin stellen die ganz besonders bevorzugten Aufbaukomponenten b4) der zuletzt genannten allgemeinen Formel dar.

Erfindungsgemäß als Aufbaukomponente b) geeignet sind weiterhin beispielsweise

b5) innerhalb von Polyetherketten eingebaute Ethylenoxideinheiten aufweisende ein- oder zweiwertige

Alkohole. Hierzu gehören beispielsweise Verbindungen der allgemeinen Formel

```
     R"             R"
     |              |
HO-CH-CH2-N-CH2-CH-OH
          |
          CO-NH-Q-NH-CO-O-X-Y-R"'
```

in welcher

Q für einen zweiwertigen Rest steht, wie er durch Entfernung der Isocyanatgruppen aus einem Diisocyanat der Formel $Q(NCO)_2$ der vorstehend unter a1) genannten Art erhalten wird,

R" für Wasserstoff oder einen einwertigen Kohlenwasserstoffrest mit 1 bis 8 Kohlenstoffatomen, vorzugsweise für Wasserstoff oder eine Methylgruppe steht,

R"' für einen einwertigen Kohlenwasserstoffrest mit 1 bis 12 Kohlenstoffatomen, vorzugsweise einen unsubstituierten Alkylrest mit 1 bis 4 Kohlenstoffatomen steht,

X für einen Rest steht, wie er durch Entfernung des endständigen Sauerstoffatoms von einer Polyalkylenoxidkette mit 5 bis 90, vorzugsweise 20 bis 70 Kettengliedern erhalten wird, welche zumindest zu 40 %, vorzugsweise zumindest zu 65 % aus Ethylenoxideinheiten bestehen und die neben Ethylenoxideinheiten auch Propylenoxid-, Butylenoxid- oder Styroloxid-Einheiten darstellen können, wobei unter den letztgenannten Einheiten Propylenoxideinheiten bevorzugt sind, und

Y für Sauerstoff oder $-NR^{IV}-$ steht, wobei $R^{IV}$ bezüglich seiner Definition R"' entspricht.

Die Herstellung der Verbindungen der letztgenannten Formeln kann gemäß den Verfahrensweisen der US-PS-3 905 929 oder der US-PS-4 190 566 erfolgen.
Weitere bevorzugte hydrophile Einbaukomponenten b5) sind Verbindungen der allgemeinen Formel

HO-X-Y-R"'

wobei
X,Y und R"' die bereits genannte Bedeutung haben.
Bei Mitverwendung derartiger, monofunktioneller, nichtionisch hydrophiler Polyether kann es oftmals von Vorteil sein, durch Mitverwendung von mehr als difunktionellen Aufbaukomponenten einen vorzeitigen Kettenabbruch zu verhindern. Die monofunktionellen Polyether der zuletzt genannten allgemeinen Formel werden nach an sich bekannten Verfahren, wie sie beispielsweise in den US-Patentschriften 3 905 929, 4 190 566 oder 4 237 264 beschrieben sind, hergestellt.
Weitere erfindungsgemäß geeignete Aufbaukomponenten b) sind

b6) Aminoalkohole des Molekulargewichtsbereichs 61 bis 300 wie z. B. Ethanolamin, Propanolamin, Diethanolamin oder Dipropanolamin.

Weitere erfindungsgemäß geeignete Aufbaukomponenten b) sind

b7) Acylharnstoffgruppen aufweisende, mehrwertige, vorzugsweise zweiwertige Alkohole, wie sie beispielsweise durch Umsetzung der unter a3) beispielhaft genannten, Acylharnstoffgruppen aufweisenden Diisocyanate, insbesondere jenen auf Basis niedermolekularer Ausgangsdiisocyanate mit den unter b1), b2) und/oder b6) beispielhaft genannten Verbindungen unter Einhaltung eines OH/NCO-Verhältnisses von 1,2 : 1 bis 30 : 1 bzw. bei Verwendung der Aminoalkohole b6) eines $NH_2$/NCO-Verhältnisses von 0,6 : 1 bis 1,2 : 1 oder, bevorzugt, durch Umsetzung der bei der Erläuterung der Komponente a3) genannten Carbodiimidgruppen aufweisenden Polyisocyanate, vorzugsweise Diisocyanate auf Basis niedermolekularer Ausgangsisocyanate mit den genannten Polyhydroxylverbindungen unter Einhaltung eines OH/NCO-Äquivalentverhältnisses von 1,2 : 1 bis 30 : 1, bzw. bei Verwendung der Aminoalkohole b6) eines $NH_2$/NCO-Verhältnisses von 0,6 : 1 bis 1,2 : 1 und anschließende Umsetzung der Umsetzungsprodukte mit Carbonsäuren R-COOH im Sinne der obengemachten Ausführungen erhalten werden können. In beiden Fällen erfolgt die Umsetzung der Polyhydroxylkomponente mit der Isocyanatkomponente vorzugsweise unter Einhaltung eines OH/NCO-Äquivalentverhältnisses von 1,5 : 1 bis 15 : 1 und insbesondere von 1,5 : 1 bis 3 : 1. Die Herstellung der Hydroxylgruppen aufweisenden Aufbaukomponenten b7) bzw. der zu ihrer Herstellung verwendeten Zwischenprodukte mit Carbodiimidgruppen erfolgt im allgemeinen im Temperaturbereich von 25 bis 130° C, vorzugsweise von 50 bis 120° C, gegebenenfalls in Anwesenheit eines inerten Lösungsmittels der in

DE-OS-2 714 293 beispielhaft genannten Art. Bezüglich der Einzelheiten der Herstellung derartiger, Acylharnstoffgruppen aufweisender Polyhydroxylverbindung sei im übrigen auf diese Vorveröffentlichung verwiesen.

Weitere erfindungsgemäß geeignete Aufbaukomponenten b) sind

b8) wasserlösliche Salze von aromatischen oder aliphatischen Monohydroxy-oder Monoaminocarbonsäuren wie z. B. die Ammonium- oder Alkalisalze von 4-Aminobenzoesäure, Milchsäure, Glycin oder Alanin.

Schließlich ist als weitere erfindungsgemäß geeignete Aufbaukomponente b)

b9) Wasser zu nennen, welches die Doppelfunktion der kontinuierlichen Phase der erfindungsgemäßen Dispersionen einerseits und die eines Kettenverlängerungsmittels andererseits übernehmen kann.

Vorzugsweise werden beim erfindungsgemäßen Verfahren im Sinne der Isocyanat-Additionsreaktion difunktionelle Aufbaukomponenten b) eingesetzt. Es ist jedoch, wie bereits ausgeführt, auch möglich, monofunktionelle Aufbaukomponenten b), insbesondere der unter b5) oder b8) genannten Art oder, zweck Erreichens einer gegebenenfalls erwünschten Molekülverzweigung, höher als difunktionelle Aufbaukomponenten b) einzusetzen.

Zu den gegebenenfalls beim erfindungsgemäßen Verfahren mit einzusetzenden Hilfs- und Zusatzmitteln c) gehören beispielsweise

c1) cyclische Anhydride von Polycarbonsäuren, die durch Reaktion mit OH-Gruppen zu Carbonsäurehalbestern reagieren und als solche potentielle Salzgruppen darstellen. Geeignete Anhydride sind z. B. 5- oder 6-gliedrige Ringverbindungen der allgemeinen Formel

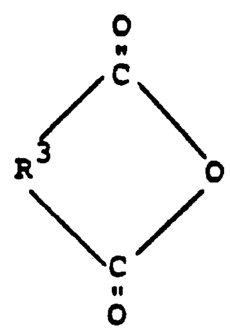

in welcher

$R^3$ für einen gegebenenfalls olefinisch ungesättigten aliphatischen, einen gegebenenfalls olefinisch ungesättigten cycloaliphatischen und/oder einen gegebenenfalls chlorsubstituierten aromatischen Kohlenwasserstoffrest mit 2 bis 20, vorzugsweise 2 bis 6 Kohlenstoffatomen steht, wie er durch Entfernung der Carboxylgruppen aus einer entsprechenden 1,2-Dicarbonsäure erhalten wird.

Typische Beispiele für erfindungsgemäß mitzuverwendende Komponenten c1) sind Bernsteinsäureanhydrid, Phthalsäureanhydrid, Tetrahydrophthalsäureanhydrid, Hexahydrophthalsäureanhydrid, Tetrachlorophthalsäureanhydrid, Endomethylentetrahydrophthalsäureanhydrid, Glutarsäureanhydrid, Trimellitsäureanhydrid, Pyromellitsäuredianhydrid und Maleinsäureanhydrid.

Die beispielhaft genannten Säureanhydride stellen eine spezielle Form von Aufbaukomponenten mit potentiellen Carboxylgruppen dar. So ist es beispielsweise möglich aus den beispielhaft genannten Aufbaukomponenten a) und b) zunächst ein Hydroxylgruppen aufweisendes Polyiso-Cyanat-Additonsprodukt herzustellen, welches dann mit den Säureanhydriden unter ringöffnender Bildung von Carboxylgruppen zur Umsetzung gebracht werden kann, worauf sich die Neutralisation der gebildeten Carboxylgruppen zwecks Einführung von Carboxylatgruppen anschließt.

Weitere erfindungsgemäß gegebenenfalls mitzuverwendende Hilfs- und Zusatzmittel c) sind beispielsweise

c2) Neutralisationsmittel für intermediär in die Polyurethane eingebaute Carboxylgruppen. Hierzu kommen im Prinzip beliebige anorganische oder organische Basen in Betracht. Vorzugsweise werden tert. Amine wie z. B. Trimethylamin, Triethylamin, N-Methylmorpholin, N-Methyldiethanolamin oder N,N-Dimethylethanolamin zur Neutralisation der gegebenenfalls in den Additionsprodukten intermediär

vorliegenden Carboxyl- und/oder Sulfonsäuregruppen eingesetzt.

Weitere, gegebenenfalls beim erfindungsgemäßen Verfahren mitzuverwendende Hilfs- und Zusatzmittel c) sind beispielsweise

c3) Lösungsmittel, die gegebenenfalls beim Aufbau der Polyurethane mitverwendet werden. Geeignete Lösungsmittel sind beispielsweise Toluol, Xylol, Aceton, Methylglykolacetat, Ethylglykolacetat, Butylacetat, N-Methylpyrrolidon, Essigsäureethylester oder Methylethylketon. Vorzugsweise werden mit Wasser mischbare Lösungsmittel wie Aceton oder N-Methylpyrrolidon verwendet.

Weitere beim erfindungsgemäßen Verfahren gegebenenfalls mitzuverwendende Hilfs- und Zusatzmittel c) sind beispielsweise

c4) einerseits Verbindungen, die mit Isocyanatgruppen unter Bildung von acylierten Aminogruppen reagieren und andererseits Verbindungen, die mit derartigen acylierten Aminogruppen im Sinne einer Kondensationsreaktion zur Umsetzung befähigt sind. Zu den erstgenannten Verbindungen gehören beispielsweise Ammoniak oder Harnstoff, zu den letztgenannten Verbindungen gehören beispielsweise beliebige Aldehyde, insbesondere Formaldehyd. Die Mitverwendung derartiger Hilfs- und Zusatzmittel c4) erfolgt dann, wenn nach dem nachstehend näher erläuterten "Schmelzdispergierverfahren" gearbeitet wird.

Weitere, gegebenenfalls mitzuverwendende Hilfs- und Zusatzmittel c) sind beispielsweise

c5) beliebige, aus der Polyurethanchemie an sich bekannte Beschleuniger für die Isocyanat-Polyadditionsreaktion. Im allgemeinen ist die Mitverwendung dieser Katalysatoren jedoch nicht erforderlich.

Weitere gegebenenfalls mitzuverwendende Hilfs- und Zusatzmittel c) sind übliche inerte Füllstoffe, Pigmente, Farbstoffe, Weichmacher oder die rheologischen Eigenschaften beeinflussende Zusätze.

Die Durchführung des erfindungsgemäßen Verfahrens, d. h. die Herstellung der erfindungsgemäßen Dispersionen kann nach beliebigen Methoden des Standes der Technik erfolgen. Bei allen Varianten des erfindungsgemäßen Verfahrens ist lediglich darauf zu achten,

(i) daß die Aufbaukomponenten mit ionischen Gruppen oder potentiellen ionischen Gruppen (a4, b4, b8 und oder c1) in einer solchen Menge in das Polyisocyanat-Additionsprodukt eingebaut werden, bzw. daß der Neutralisationsgrad der in die Polyurethane eingebauten potentiellen ionischen Gruppen so gewählt wird, daß die Polyisocyanat-Additionsprodukte von 2 bis 300, vorzugsweise von 5 bis 200 und insbesondere von 5 bis 120 Milliäquivalente pro 100 g Feststoff an eingebauten Sulfonat- und/oder Carboxylatgruppen aufweisen, wobei sichergestellt sein muß, daß die Polyisocyanat-Additionsprodukte einen solchen Gehalt an ionischen Gruppen aufweisen, der zusammen mit den gegebenenfalls ebenfalls vorliegenden nichtionisch-hydrophilen Gruppen die Löslichkeit bzw. Dispergierbarkeit der Polyisocyanat-Additionsprodukte in Wasser gewährleistet;

(ii) daß die gegebenenfalls mitzuverwendenden Aufbaukomponenten mit nicht-ionisch-hydrophilen Gruppen (a4 und/oder b5) maximal in einer solchen Menge mitverwendet werden, daß der Gehalt der Polyisocyanat-Additionsprodukte an innerhalb von Polyetherketten vorliegenden Ethylenoxideinheiten $CH_2$-$CH_2$-O-25 Gew.-%, vorzugsweise 20 Gew.-% und besonders bevorzugt 15 Gew.-%, bezogen auf Feststoff, nicht übersteigt und

(iii) daß die Menge der Acylharnstoffgruppen aufweisenden Aufbaukomponenten (a3 und oder b7 ) so bemessen wird, daß der Gehalt der Polyisocyanat-Additionsprodukte an Acylharnstoffgruppen bildenden Struktureinheiten der Formel

$$-NH-CO-\underset{|}{N}-CO-$$

bei 0,1 bis 20 Gew.-%, vorzugsweise 2 bis 15 Gew.-% liegt.

Wie bereits ausgeführt, kann die Durchführung des erfindungsgemäßen Verfahrens nach mehreren, an sich bekannten Ausführungsformen erfolgen:

1. gemäß dem "Acetonverfahren" wird in Analogie zu der Lehre der DE-OS-1 495 745 (= US-PS-3 479 310)

bzw. zu der DE-OS 1 495 847 (= GB-PS 1 076 788) ein NCO-Prepolymer in der Schmelze oder auch gegebenenfalls in Gegenwart von Lösungsmitteln der unter c3) beispielhaft genannten Art hergestellt. Als Ausgangsmaterialien werden hierbei insbesondere einfache Diisocyanate der unter a1) genannten Art, gegebenenfalls höhermolekulare Polyhydroxylverbindungen der unter b1) genannten Art, gegebenenfalls Kettenverlängerungsmittel der unter b2) oder auch unter b3) beispielhaft genannten Art, ionische Aufbaukomponenten der unter b4) beispielhaft genannten Art bzw. die entsprechenden potentiellen ionischen Aufbaukomponenten und gegebenenfalls nicht-ionisch-hydrophile Aufbaukomponenten der unter b5) beispielhaft genannten Art unter Mitverwendung der unter a3) und/oder b7) beispielhaft genannten, Acylharnstoffgruppen aufweisenden Aufbaukomponenten eingesetzt. Im allgemeinen wird hierbei zunächst ein NCO-Prepolymer hergestellt, welches anschließend in einem geeigneten Lösungsmittel gelöst wird, worauf sich die Kettenverlängerung in Lösung zum ausreagierten Polyurethan anschließt. Der Einbau der ionischen Gruppen erfolgt hierbei bei der Herstellung des Prepolymeren durch Mitverwendung entsprechender ionischer bzw. potentieller ionischer Aufbaukomponenten b4) und/oder bei der Kettenverlängerung unter Mitverwendung von niedermolekularen, difunktionellen ionischen Aufbaukomponenten der unter b4) beispielhaft genannten Art. Bei dieser Ausführungsform werden vorzugsweise difunktionelle Aufbaukomponenten der beispielhaft genannten Art eingesetzt. Das Äquivalentverhältnis zwischen Isocyanatgruppen und gegenüber Isocyanatgruppen reaktionsfähigen Gruppen liegt vorzugsweise zwischen 0,7 : 1 und 2 : 1. Die Lösung des so erhaltenen Polyurethans wird dann mit Wasser vermischt, in welchem gegebenenfalls Neutralisationsmittel der unter c2) beispielhaft genannten Art zwecks Neutralisation von gegebenenfalls vorliegenden potentiellen ionischen Gruppen vorliegen. Gewünschtenfalls kann im Anschluß an die Durchmischung mit dem Wasser das Lösungsmittel aus der entstandenen wäßrigen Polyurethandispersion abdestilliert werden.

Eine Variante dieser Ausführungsform besteht in der Verwendung von vorab separat hergestellten NCO-Prepolymeren der unter a2) beispielhaft genannten Art, die zusammen mit Acylharnstoffgruppen aufweisenden Aufbaukomponenten der unter a3) und/oder b7) genannten Art und vorzugsweise niedermolekularen ionischen Aufbaukomponenten der unter b4) genannten Art und gegebenenfalls nicht-ionisch-hydrophilen Aufbaukomponenten der unter b5) genannten Art in Lösung zum Polyurethan ausreagiert werden, worauf sich die Durchmischung mit Wasser anschließt.

2. Eine weitere Ausführungsform des erfindungsgemäßen Verfahrens entspricht der aus DE-OS-2 725 589, US-PS-4 269 748, US-PS-4 192 937 oder US-PS-4 292 226 bekannten Verfahrensweise, gemäß welcher blockierte Kettenverlängerungsmittel der unter b3) genannten Art oder auch, entsprechend der Lehre der US-PS-4 192 937 Oxazolidine oder entsprechend der US-PS 4 292 226 Aminsalze als potentielle Kettenverlängerungsmittel eingesetzt werden. Hierbei werden vorab hergestellte NCO-Prepolymere, die aus den oben beispielhaft genannten Ausgangsmaterialien unter Mitverwendung von unter a3) und/oder b7) beispielhaft genannten, Acylharnstoffgruppen aufweisenden Aufbaukomponenten und unter Mitverwendung von ionischen Aufbaukomponenten der unter b4) genannten Art und gegebenenfalls unter Mitverwendung von nicht-ionisch-hydrophilen Aufbaukomponenten der unter b5) genannten Art unter Einhaltung eines Äquivalentverhältnisses von Isocyanatgruppen zu gegenüber Isocyanatgruppen reaktionsfähigen Gruppen von 1,2 : 1 bis 3 : 1 in der Schmelze oder in Lösung hergestellt worden sind mit den genannten blockierten Kettenverlängerungsmitteln vermischt und dieses Gemisch anschließend mit Wasser versetzt, wodurch das vorher blockierte Amin oder Hydrazin freigesetzt wird und als Kettenverlängerer des Prepolymeren reagiert. Auch hier kann das Wasser gegebenenfalls das Neutralisationsmittel für gegebenenfalls vorliegende potentielle ionische Gruppen gelöst enthalten.

3. Eine weitere Ausführungsform des erfindungsgemäßen Verfahrens entspricht dem aus US-PS-3 756 992 bekannten "Schmelzdispergier-Verfahren" gemäß welchem endständige Isocyanatgruppen von hydrophil modifizierten Prepolymeren mit Harnstoff, Ammoniak oder anderen geeigneten Verbindungen in der Schmelze in acylierte Amine überführt werden und diese vor, während oder nach der Zugabe von Wasser durch Reaktion mit Formaldehyd in Methylolgruppen überführt werden. Die Methylolgruppen aufweisenden, in Wasser dispergierten oder gelösten Produkte können dann beispielsweise durch Erhitzen auf 50 bis 150°C und eine hierdurch hervorgerufene Kondensationsreaktion der reaktiven Methylolgruppen in hochmolekulare Polyurethane überführt werden.

Die hierbei eingesetzten NCO-Prepolymeren werden ebenfalls wie bei der zweiten Ausführungsform unter Mitverwendung der erfindungswesentlichen Aufbaukomponente a3) und/oder b7) hergestellt.

4. Eine weitere Ausführungsform der Durchführung des erfindungsgemäßen Verfahrens besteht darin, NCO-Gruppen aufweisende Prepolymere, die, wie bereits oben unter 2. beschrieben, die erfindungswesentlichen Aufbaukomponenten a3) und/oder b7) eingebaut enthalten, als solche zunächst in Wasser zu dispergieren, welches gegebenenfalls das zur Neutralisation von gegebenenfalls vorliegenden potentiellen ionischen Gruppen benötigte Neutralisationsmittel enthält, und anschließend der so erhaltenen wäßrigen Dispersion ein aminisches oder hydrazinisches Kettenverlängerungs- oder Vernetzungsmittel der unter b3) genannten Art mit freien Aminogruppen unter Einhaltung eines NCO/NH-Äquivalentverhältnisses von 1 : 0,2 bis 1 : 1,1, vorzugsweise 1 : 0,3 bis 1 : 0,98 zuzumischen. Die Kettenverlängerung wird dann bei 5 bis 90°C, vorzugsweise 20 bis 80°C durchgeführt.

5. Eine weitere Ausführungsform des erfindungsgemäßen Verfahrens besteht darin, "Hydroxylgruppen aufweisende Zwischenprodukte"die den erfindungswesentlichen Gehalt an Acylharnstoffgruppen, jedoch nur einen Teil der erforderlichen oder überhaupt keine ionischen Gruppen oder potentiellen ionischen Gruppen aufweisen, mit cyclischen Carbonsäureanhydriden umzusetzen. Die Carbonsäureanhydride werden hierbei in einer Menge eingesetzt, die einem Äquivalentverhältnis der Hydroxylgruppen zu den Anhydridgruppen von 0,9 : 1 bis 10 : 1, Vorzugsweise 1 : 1 bis 5 : 1, und besonders bevorzugt 1:1 bis 2:1 entsprechen. Anschließend werden die so erhaltenen Umsetzungsprodukte in Wasser gelöst oder dispergiert, wobei die zumindest teilweise Neutralisation der Carboxylgruppen vor und oder während der Dispergierung erfolgt. Die Umsetzung der Hydroxylgruppen aufweisenden Zwischenprodukte mit den Carbonsäureanhydriden erfolgt hierbei gegebenenfalls in Gegenwart von Lösungsmitteln der unter c3) genannten Art vorzugsweise bei Temperaturen zwischen 20 und 150°C, insbesondere zwischen 20 und 100°C.

Bei den erforderlichen "Hydroxylgruppen aufweisenden Zwischenprodukten" kann es sich im einfachsten Fall um Acylharnstoffgruppen aufweisende Polyhydroxylverbindungen der unter b7) beispielhaft genannten Art handeln. Weiterhin geeignete "Hydroxylgruppen aufweisende Zwischenprodukte" sind Prepolymere, die in Analogie zur Herstellung der unter 1. bis 3. genannten NCO-Prepolymeren, jedoch unter Verwendung eines Überschusses an Verbindungen mit gegenüber Isocyanatgruppen reaktionsfähigen Gruppen, d. h. insbesondere an Hydroxylgruppen hergestellt worden sind, und zwar vorzugsweise unter Einhaltung eines Äquivalentverhältnisses von Isocyanatgruppen zu Hydroxylgruppen von 0,2 : 1 bis 0,9 : 1, insbesondere 0,2 : 1 bis 0,6 : 1 und besondersbevorzugt von 0,3 : 1 bis 0,5 : 1. Wie bereits dargelegt, brauchen diese Hydroxylgruppen aufweisenden Prepolymere keine oder nur einen Teil der zur Löslichkeit oder Dispergierbarkeit der letztlich gelösten oder dispergierten Umsetzungsprodukte benötigten hydrophilen Struktureinheiten aufzuweisen.

Eine weitere Variante der Herstellung der "Hydroxylgruppen aufweisenden Zwischenprodukte" besteht in der Umsetzung der unter 1. bis 3. bereits genannten NCO-Prepolymeren mit niedermolekularen Polyolen der unter b2) genannten Art oder vorzugsweise mit Aminoalkoholen wie Ethanolamin, Propanolamin oder Diethanolamin unter Einhaltung eines Äquivalentverhältnisses der Isocyanatgruppen des Prepolymeren zu den gegenüber Isocyanatgruppen reaktionsfähigen Gruppen von 0,2 : 1 bis 0,6 : 1) vorzugsweise 0,3 : 1 bis 0,5 : 1. Diese Umsetzung erfolgt vorzugsweise innerhalb des Temperaturbereichs von 20 bis 150°C, vorzugsweise 50 bis 130°C in der Schmelze oder in Gegenwart geeigneter Lösungsmittel der unter c3) beispielhaft genannten Art.

6. Eine weitere Variante der Durchführung des erfindungsgemäßen Verfahrens besteht beispielsweise darin, Acylharnstoffgruppen aufweisende NCO-Prepolymere der unter a3) beispielhaft genannten Art mit monofunktionellen ionischen Aufbaukomponenten der unter b8) beispielhaft genannten Art umzusetzen, um so zu erfindungsgemäßen Polyisocyanat-Additionsprodukten zu gelangen. Diese Umsetzung kann beispielsweise in acetonischer Lösung unter anschließender Dispergierung des Umsetzungsprodukts in Wasser erfolgen oder aber auch dergestalt, daß man beispielsweise eine acetonische Lösung der Komponente a3) mit einer wäßrigen Lösung der Komponente b8) zur Reaktion bringt. Bei dieser Umsetzung werden die Mengenverhältnisse der Reaktionspartner im allgemeinen so gewählt, daß das Äquivalentverhältnis zwischen Isocyanatgruppen der Komponente a3) und den gegenüber Isocyanatgruppen reaktionsfähigen Gruppen der Komponente b8) bei 0,5 : 1 bis 1,5 : 1 liegt.

Durch geeignete Wahl der Ausgangskomponenten und der bei den einzelnen Ausführungsformen zum Einsatz gelangenden Äquivalentverhältnisse können die Eigenschaften der Polyurethane, insbesondere auch ihr Molekulargewicht, innerhalb weiter Grenzen variiert und dem jeweils angestrebten Verwendungszweck angepaßt werden. Der Begriff "Polyisocyanat-Additionsprodukte" bzw. "Polyisocyanat-Polyadditionsprodukte" umfaßt im Rahmen der vorliegenden Erfindung somit auch vergleichsweise niedermolekulare Umsetzungsprodukte, die beispielsweise durch die ionische Modifizierung der Acylharnstoffgruppen aufweisenden Polyole mit Carbonsäureanhydriden ohne weitere Kettenverlängerung hergestellt werden können.

Die Überführung der gemäß den einzelnen Ausführungsformen erhaltenen Lösungen oder Schmelzen der Polyisocyanat-Additionsprodukte oder Prepolymeren in eine wäßrige Lösung oder Dispersion kann grundsätzlich nach verschiedenen Arbeitsweisen erfolgen. Die Verwendung von Geräten, die hohe Schergefälle erzeugen oder die Verwendung von nicht-mechanischen Dispergiermitteln wie Schallwellen extrem hoher Frequenz ist möglich, im allgemeinen jedoch nicht erforderlich, da auch einfache Mischaggregate wie z. B. Rührkessel oder sogenannte Rücklaufmischer zur Dispergierung der im allgemeinen selbst dispergierbaren Polycyanat-Additionsprodukte bzw. Prepolymeren ausreichend sind. Aus dem gleichen Grund ist es auch prinzipiell möglich, erfindungsgemäße Polyisocyanat-Additionsprodukte in fester Form zu gewinnen, d, h. in Form von Pulvern, Harzen oder in stückiger Form und diese Materialien in einem unabhängigen Schritt zu dispergieren oder zu lösen.

Außerdem wurde überraschenderweise festgestellt, daß es auch möglich ist, die Versalzung der potentiellen hydrophilen Gruppen zunächst in dem Maße vorzunehmen, daß zunächst relativ grobteilige Dispersionen oder

Suspensionen entstehen und diese nachträglich durch Zugabe weiterer Gegenionen zu den noch vorhandenen potentiell ionischen Gruppen in feinteilige Dispersionen oder Lösungen überführt werden. Aufgrund der niedrigen Viskosität der grobteiligen Zwischenstufenlassen sich diese in höherer Konzentration herstellen, was zu günstigen Frachtkosten führt.

Gewünschtenfalls können die erfindungsgemäßen Dispersionen auch im Anschluß an ihre Herstellung mit Isocyanaten in Analogie zur Arbeitsweise der DE-OS-2 708 242 modifiziert werden.

Bei allen Ausführungsformen des erfindungsgemäßen Verfahrens wird im allgemeinen die Menge des Wassers so bemessen, daß Lösungen oder Dispersionen mit einem Feststoffgehalt von bis zu 60 Gew.-%, vorzugsweise von 10 bis 60 Gew.-% und insbesondere von 10 bis 50 Gew.-% resultieren. Der Teilchendurchmesser der dispergierten Festkörper liegt im allgemeinen unter 1 µm, bevorzugt zwischen 0,001 und 0,5 µm. Der durchschnittliche Teilchendurchmesser sollte unter 0,5 µm, bevorzugt zwischen 0,01 und 0,3 um liegen.

Bei sehr niedrigem Gehalt an hydrophilen Gruppen können auch mittlere Teilchendurchmesser zwischen 5 µ und ca. 50 µ erhalten werden. Derartige Dispersionen sind beispielsweise für die Herstellung von Polyurethanpulvern von Interesse.

Wenn die gelösten oder dispergierten Polyisocyanat-Additionsprodukte auch Ethylenoxid-Einheiten als hydrophile Gruppen enthalten, sind sie trotz ihres Gehalts an ionischen Gruppen weitgehend unempfindlich gegen Elektrolyte.

Die Lösungen oder Dispersionen können mit anderen Dispersionen verschnitten werden, wie z. B. mit Polyvinylacetat, Polyethylen-, Polystyrol-, Polybutadien-, Polyvinylchlorid-, Polyacrylat- und Copolymerisat-Kunststoffdispersionen. Auch der Zusatz von an sich bekannten chemisch nicht fixierten, vorzugsweise ionischen Emulgatoren ist möglich, jedoch selbstverständlich nicht erforderlich.

Schließlich können auch Füllstoffe, Weichmacher, Pigmente, Ruß- und Kieselsäuresole, Aluminium-, Ton- und Asbest-Dispersionen in die Dispersionen eingearbeitet werden.

Die erfindungsgemäßen Lösungen bzw. Dispersionen sind meist stabil, lager- und versandfähig und können zu einem beliebigen späteren Zeitpunkt, z. B. formgebend, verarbeitet werden. Sie trocknen im allgemeinen unmittelbar zu formstabilen Kunststoffüberzügen auf, jedoch kann die Formgebung der Verfahrensprodukte auch in Gegenwart von an sich bekannten Vernetzungsmitteln erfolgen.

Je nach Art der eingebauten Acylharnstoffgruppen erhält man Verfahrensprodukte mit unterschiedlichen Eigenschaften. So können durch Einbau von längerkettigen Fettsäuren R-COOH mit mindestens 10 Kohlenstoffatomen wertvolle Papierleimungsmittel hergestellt werden.

Von weiterem Vorteil ist die problemlose Einführung von seitenständigen Doppelbindungen durch Einbau von ungesättigten Carbonsäuren R-COOH, wodurch die Möglichkeit einer nachträglichen Vernetzung geschaffen wird.

Weiterhin kann durch Wahl der seitenständigen Acylharnstoffgruppenreste die Hydrophilie bzw. Hydrophobie der Produkte auf einfache Weise gesteuert werden.

Die Verfahrensprodukte sind zur Beschichtung bzw. zum Überziehen und zum Imprägnieren von gewebten und nicht-gewebten Textilien, Leder, Papier, Holz, Metallen, Keramik, Stein, Beton, Bitumen, Hartfaser, Stroh, Glas, Porzellan, Kunststoffen der verschiedensten Art, Glasfasern, zur antistatischen und knitterfreien Ausrüstung, als Binder für Vliese, Klebstoffe, Haftvermittler, Kaschierungsmittel, Hydrophobiermittel, Weichmacher, Bindemittel, z. B. für Kork- oder Holzmehl, Glasfasern, Asbest, papierartige Materialien, Plastik- oder Gummiabfälle, keramische Materialien, als Hilfsmittel im Zeugdruck und in der Papierindustrie, als Zusatz zu Polymerisaten, als Schlichtemittel, beispielsweise für Glasfasern, und zur Lederausrüstung geeignet.

Erfindungsgemäße Dispersionen und insbesondere Lösungen von Acylharnstoffgruppen aufweisenden Polyisocyanat-Additionsprodukten, die als hydrophile Zentren ausschließlich Carboxylatgruppen und ein aus der Art und Stöchiometrie der Ausgangsmaterialien errechenbares Molekulargewicht von 600 bis 10 000, vorzugsweise 800 bis 5000 und besonders bevorzugt von 800 bis 3000 aufweisen, sind ganz besonders gut für die Papierleimung geeignet. Diese niedermolekularen Polyisocyanat-Additions-Produkte werden vorzugsweise ohne die Mitverwendung von höhermolekularen Polyhydroxylverbindungen der unter b1) beispielhaft genannten Art und gegebenenfalls unter Mitverwendung von Kettenabbrechern wie z. B monofunktionellen Alkoholen wie Methanol, Ethanol, n-Butanol oder n-Octanol hergestellt, wobei zunächst aus difunktionellen Ausgangsmaterialien unter Verwendung eines NCO-Überschusses ein NCO-Prepolymer hergestellt wird, welches dann mit dem Kettenabbrecher zur Reaktion gebracht wird.

Im Falle der Verwendung der erfindungsgemäßen Dispersionen oder Lösungen, insbesondere der zuletzt genannten Lösungen von Carboxylatgruppen aufweisenden, vergleichsweise niedermolekularen Polyisocyanat-Additionsprodukten als Papierleimungsmittel bzw. zur Herstellung von Papierleimungsmitteln können die in Papierleimungsmitteln üblichen Zusätze mitverwendet werden. In Betracht kommen beispielsweise Alaun, kationische oder anionische Hilfsmittel, z. B. auf Basis kationischer Stärke, quaternierter Polyamine, quaternierter Polyamidamine, quaternierter basischer Formaldehydharze, Methylcellulose, Carboxymethylcellulose, Ligninsulfonsäuren, Stärken und Polysacchariden verschiedenster Genese, Xanthan, Pullulan, Chitosan, Polymerisaten oder Copolymerisaten von (Meth)Acrylsäure, (Meth)Acrylamid, Malein-, Fumar-, Itaconsäure oder sonstiger Polymeren und Copolymeren mit gegebenenfalls in Salzform vorliegenden Carboxyl-oder Sulfonsäuregruppen bzw. Kollagen, Gelatine, Alginaten und Carraghenaten.

Die Wirksamkeit der erfindungsgemäßen Leimungsmittel wird durch Weißtöner nicht verschlechtert. Die wäßrigen Zubereitungen lassen sich zudem ohne Emulgierhilfsmittel herstellen, obgleich der Einsatz solcher

Hilfsmittel gegebenenfalls in Betracht zu ziehen ist.

Die Leimungsmittel sind allein oder in Kombination mit anderen Leimungsmitteln besonders gut geeignet zur Oberflächenleimung von Papier, können selbstverständlich aber auch zur Masseleimung eingesetzt werden. Sie können nicht nur bei kreidehaltigen oder kaolinhaltigen Papieren verwendet werden, sondern auch bei solchen, die keinen oder einen andersartigen Füllstoff enthalten, wie z. B. Talkum oder Gips. Ebenso sind sie zur Leimung von cellulosehaltigen Materialien wie Pappe, Textilmaterial, Leder, Karton oder Holzspanplatten bzw. Dämmplatten geeignet.

Im folgenden soll die Erfindung beispielhaft erläutert werden. Die angegebenen Teile und Prozente beziehen sich auf das Gewicht, sofern nichts anderes vermerkt ist.

**Beispiel 1**

87,0 Teile (0,5 Mol) 2,4-Toluylen-diisocyanat werden bei Raumtemperatur mit 0,05 Teilen eines Gemisches aus 1-Metyl-1-phospha-2-cyclopenten-1-oxid und 1-Methyl-1-phospha-3-cyclopenten-1-oxid versetzt und auf 80°C (hier und nachstehend beziehen sich alle Angaben der Reaktionstemperatur auf die Temperatur des Wärmebades) erhitzt. Der Carbodiimidisierungsgrad kann an der $CO_2$-Entwicklung und am Abfall des NCO-Gehaltes verfolgt werden. Bei einem NCO-Gehalt von 32,9 % wird auf 60°C abgekühlt und mit 0,2 Teilen Phosphortrichlorid abgestoppt. Nach weiteren 30 Minuten stellt sich ein konstanter NCO-Wert ein.

Analyse des Reaktionsproduktes:
NCO-Wert: 30,1 %
NCN-Einheiten pro Molekül (Durchschnittswert): 0,80

Das erhaltene Reaktionsgemisch wird bei 80°C mit 59,8 Teilen (0,575 Mol) Neopentylglykol, gelöst in 56,8 Teilen N-Methylpyrrolidon, versetzt. Nach 60 Minuten beträgt der NCO-Wert 0,0 %. Es wird auf 150°C aufgeheizt, mit 35,7 Teilen (0,125 Mol) Stearinsäure versetzt und solange verrührt, bis keine freie Säure mehr nachweisbar ist (Säurezahl = 0,0).

Anschließend wird auf 100°C abgekühlt und mit 147,6 Teilen (0,88 Mol) Hexamethylendiisocyanat versetzt. Nach 25 Minuten wird auf 70°C abgekühlt, und 842 Teile Aceton werden zugegeben. Nach weiteren 30 Minuten werden 65 Teile (0,485 Mol) Dimethylolpropionsäure gelöst in 65 Gewichtsteilen N-Methylpyrrolidon sowie 11,8 Gewichtsteile (0,16 Mol) n-Butanol zugegeben. Nach 9 Stunden bei 70°C beträgt der NCO-Wert 0,0 %. Es wird auf 60°C abgekühlt und mit 49,0 Teilen (0,485 Mol) Triethylamin versalzt. Nach 5 Minuten wird mit 983 Teilen Wasser dispergiert und das Lösungsmittel unmittelbar danach abgezogen.

Es entsteht eine feinteilige Dispersion mit einem Feststoffgehalt von 32,4 %. Der Gehalt des dispergierten Polyurethans an Carboxylatgruppen liegt bei 109 Milliäquivalenten pro 100 g Feststoff, der Gehalt an acylierten Harnstoffgruppen

-NH-CO-N-CO liegt bei 2,4 %, bezogen auf Feststoff.

 |

**Beispiel 2**

87,0 Teile (0,5 Mol) 2,4-Toluylen-diisocyanat werden bei Raumtemperatur mit 0,05 Teilen eines Gemisches aus 1-Methyl-phospha-2-cyclopenten-1-oxid und 1-Methyl-1-phospha-3-cyclopenten-1-oxid versetzt und auf 80°C erhitzt. Der Carbodiimidisierungsgrad kann an der $CO_2$-Entwicklung und am Abfall des NCO-Gehaltes verfolgt werden. Bei einem NCO-Gehalt von 22,4 % wird auf 60°C abgekühlt und mit 0,2 Teilen Phosphortrichlorid abgestoppt. Nach weiteren 30 Minuten stellt sich ein konstanter NCO-Wert ein.

Analyse des Reaktionsproduktes
NCO-Wert: 20,83 %
NCN-Einheiten pro Molekül (Durchschnittswert): 1,76

Das erhaltene Reaktionsgemisch wird bei 80°C mit 39,09 Teilen (0,357 Mol) Neopentylglykol, gelöst in 44 Teilen N-Methylpyrrolidon, versetzt. Nach 60 Minuten sind alle NCO-Gruppen abreagiert. Es wird auf 150°C aufgeheizt, mit 42,52 Teilen (0,149 Mol) Stearinsäure versetzt und 30 Minuten verrührt (Säurezahl 0,0 %).

Anschließend wird auf 100°C abgekühlt und mit 107,6 Teilen (0,64 Mol) Hexamethylendiisocyanat versetzt. Nach 15 Minuten wird auf 80°C abgekühlt, und 52,0 Teile (0,39 Mol) Dimethylolpropinsäure und 8,63 Teile (0,117 Mol) n-Butanol werden zugegeben. Nach weiteren 15 Minuten wird mit 150 Teilen Aceton verdünnt. Nach 4 Stunden bei 80°C beträgt der NCO-Wert 0,0 %. Es wird auf 60°C abgekühlt und mit 39,2 Teilen (0,39 Mol) Triethylamin versalzt. Nach 10 Minuten wird mit 795 Teilen Wasser (50°C Warm) dispergiert und das Lösungsmittel unmittelbar danach abgezogen.

Es entsteht eine feinteilige Dispersion mit einem Feststoffgehalt von 24,7 %. Der Gehalt des dispergierten Polyurethans an Carboxylatgruppen liegt bei 108 Milliäquivalenten pro 100 g Feststoff, der Gehalt an acylierten Harnstoffgruppen liegt bei 3,5 %, bezogen auf Feststoff.

**Beispiel 3**

87,0 Teile (0,5 Mol) 2,4-Toluylen-diisocyanat werden bei Raumtemperatur in 100 Teilen Aceton gelöst, mit 0,05 Teilen eines Gemisches aus 1-Methyl-1-phospha-2-cyclo-penten-1-oxid und 1-Methyl-1-phospha-3-cyclopenten-1-oxid versetzt und auf 80°C erhitzt. Der Carbodiimidisierungsgrad kann an der $CO_2$-Entwicklung und am Abfall des NCO-Gehaltes verfolgt werden. Bei einem NCO-Gehalt von 6,7 % wird auf 60°C abgekühlt und mit 0,2 Teilen Phosphortrichlorid abgestoppt. Nach weiteren 30 Minuten stellt sich ein konstanter NCO-Wert ein.

Analyse des Reaktionsproduktes
NCO-Wert der Lösung: 6,21 %
NCN-Einheiten pro Molekül (Durchschnittswert): 2,96

Das erhaltene Reaktionsgemisch wird bei 80°C mit 16,6 Teilen (0,268 Mol) Monoethylenglykol versetzt. Nach 30 Minuten bei 80°C beträgt der NCO-Wert 0,0 %.

Das Reaktionsgemisch wird auf 90°C aufgeheizt und mit 61,3 Teilen (0,216 Mol) Stearinsäure versetzt.

Nach 2 Stunden bei 90°C ist die Säurezahl 0,0 % und es werden 92,1 Teile (0,548 Mol) Hexamethylendiisocyanat zugegeben. Nach weiteren 30 Minuten bei 90°C wird mit 48,0 Teilen (0,350 Mol) Dimethylolpropionsäure und 7,38 Teilen (0,1 Mol) n-Butanol in 150 Teilen Aceton versetzt. Nach 5,5 Stunden beträgt der NCO-Wert 0,0 %.

Es wird auf 60°C abgekühlt und mit 36,2 Teilen (0,358 Mol) Triethylamin versalzt.

Nach 5 Minuten wird mit 945 Teilen Wasser dispergiert. Es entsteht eine feinteilige Dispersion mit einem Feststoffgehalt von 23,2 %. Der Gehalt des dispergierten Polyurethans an Carboxylatgruppen liegt bei 108 Milliäquivalenten pro 100 g Feststoff, der Gehalt an acylierten Harnstoffgruppen liegt bei 5,5 %, bezogen auf Feststoff.

**Beispiel 4**

87,0 Teile (0,5 Mol) 2,4-Toluylen-diisocyanat werden in 50 Teilen Aceton gelöst, bei Raumtemperatur mit 0,05 Teilen eines Gemisches aus 1-Methyl-1-phospha-2-cyclopenten-1-oxid und 1-Methyl-1-phospha-3-cyclopenten-1-oxid versetzt und auf 80°C erhitzt. Der Carbodiimidisierungsgrad kann an der $CO_2$-Entwicklung und am Abfall des NCO-Gehaltes verfolgt werden. Bei einem NCO-Gehalt von 12,0 % wird auf 60°C abgekühlt und mit 0,2 Teilen Phosphortrichlorid abgestoppt. Nach weiteren 30 Minuten stellt sich ein konstanter NCO-Wert ein.

Analyse des Reaktionsproduktes
NCO-Wert: 11,0 %
NCN-Einheiten pro Molekül (Durchschnittswert): 2,12

Das erhaltene Reaktionsgemisch wird bei 80°C mit 62,0 Teilen (0,218 Mol) Stearinsäure versetzt und 45 Minuten bei 80°C gerührt. Anschließend werden 51,2 Teile (0,492 Mol) Neopentylglykol in 50 Teilen Aceton zugegeben. Nach 60 Minuten wurden folgende Analysenwerte erhalten.

NCO-Wert: 0,0 %
Säurezahl: 0,0

Es wird auf 90°C aufgeheizt und mit 177,1 Teilen (1,02 Mol) 2,4-Toluylen-diisocyanat und nach 5 Minuten mit 80,0 Teilen (0,597 Mol) Dimethylolpropionsäure, gelöst in 200 Teilen Aceton versetzt. Nach 2,5 Stunden Reaktionszeit werden bei 90°C 13,7 Teile (0,185 Mol) n-Butanol, gelöst in 200 Teilen Aceton, zugegeben.

Nach 3 Stunden beträgt der NCO-Wert 0,0 %. Es wird auf 70°C abgekühlt und mit 60,3 Teilen Triethylamin (0,597 Mol) versalzt. Nach 10 Minuten wird mit 1200 Teilen Wasser dispergiert und das Aceton sofort abgezogen.

Es entsteht eine feinteilige Dispersion mit einem Feststoffgehalt von 27,8 %. Der Gehalt des dispergierten Polyurethans an Carboxylatgruppen liegt bei 116 Milliäquivalenten pro 100 g Feststoff, der Gehalt an acylierten Harnstoffgruppen liegt bei 3,6 %, bezogen auf Feststoff.

**Beispiel 5**

87,0 Teile (0,05 Mol) 2,4-Toluylen-diisocyanatt werden bei Raumtemperatur mit 0,05 Teilen eines Gemisches aus 1-Methyl-1-phospha-2-cyclopenten-1-oxid und 1-Methyl-1-phospha-3-cyclopenten-1-oxid versetzt und auf 80°C erhitzt. Der Carbodiimidisierungsgrad kann an der $CO_2$-Entwicklung und am Abfall des NCO-Gehaltes verfolgt werden. Bei einem NCO-Gehalt von 18,7 % wird auf 60°C abgekühlt und in 0,02 Teilen Phosphortrichlorid abgestoppt. Nach weiteren 30 Minuten Stellt sich ein konstanter NCO-Wert ein.

Analyse des Reaktionsproduktes
NCO-Wert: 17,85 %
NCN-Einheiten pro Molekül (Durchschnittswert): 2,28

Das erhaltene Reaktionsgemisch wird bei 80°C mit 62,15 Teilen (0,218 Mol) Stearinsäure versetzt und 30 Minuten bei 80°C verrührt.

Analyse des Reaktionsproduktes
NCO-Wert: 10,6
Säurezahl: 0,0
Anschließend werden bei weiterhin 80°C 57,8 Teile (0,556 Mol) Neopentylglykol, gelöst in 50 Teilen Toluol, zugegeben. Nach 45 Minuten bei 80°C beträgt der NCO-Wert 0,0 %. Das Reaktionsprodukt wird auf 90°C erhitzt und mit 357,8 Teilen (0,206 Mol) 2,4-Toluylen-diisocyanat und nach weiteren 5 Minuten mit 135,0 Teilen (1,0 Mol) Dimethylolpropionsäure versetzt. Nach 1 Stunde werden bei 90°C 101,6 Teile (1,37 Mol) n-Butanol, gelöst in 100 Teilen Toluol, zugegeben. Nach 80 Minuten beträgt der NCO-Wert 0,0 %. Es Wird auf 70°C abgekühlt und mit 101,0 Teilen (1,0 Mol) Triethylamin versalzt und nach 10 Minuten mit 200 Teilen Toluol verdünnt. Anschließend wird mit 2060 Teilen Wasser dispergiert und das Lösungsmittel sofort abgezogen

Es entsteht eine feinteilige Dispersion mit einem Feststoffgehalt von 30,45 %. Der Gehalt des dispergierten Polyurethans an Carboxylatgruppen liegt bei 113 Milliäquivalenten pro 100 g Feststoff, der Gehalt an acylierten Harnstoffgruppen liegt bei 2,1 %, bezogen auf Feststoff.

**Beispiel 6**

87,0 Teile (0,5 Mol) 2,4-Toluylen-diisocyanat werden in 50 Teilen Aceton gelöst, bei Raumtemperatur mit 0,05 Teilen eines Gemisches aus 1-Methyl-phospha-2-cyclopenten-1-oxid und 1-Methyl-1-phospha-3-cyclopenten-1-oxid versetzt und auf 80°C erhitzt. Der Carbodiimidisierundgsgrad kann an der $CO_2$-Entwicklung und am Abfall des NCO-Gehaltes verfolgt werden. Bei einem NCO-Gehalt von 11,1 % wird auf 60°C abgekühlt und in 0,2 Teilen Phosphortrichlorid abgestoppt. Nach weiteren 30 Minuten stellt sich ein konstanter NCO-Wert ein.
Analyse des Reaktionsproduktes
NCO-Wert: 10,7 Gew.-%
NCN-Einheiten pro Molekül (Durchschnittswert): 3,26
Das erhaltene Reaktionsgemisch wird bei 80°C mit 63,5 Teilen (0,223 Mol) Stearinsäure versetzt und 1 Stunde bei 80°C verrührt.
Analyse des Reaktionsproduktes
NCO-Wert: 7,4 %
Säurezahl: 0,0
Anschließend werden bei 80°C 35,4 Teile (0,34 Mol) Neopentylglykol, gelöst in 50 Teilen Aceton, zugegeben. Nach 35 Minuten bei 80°C beträgt der NCO-Wert 0,0 %. Das Reaktionsprodukt wird auf 90°C aufgeheizt und mit 173,5 Teilen 2,4-Toluylen-diisocyanat und nach weiteren 5 Minuten mit 80,0 Teilen (0,597 Mol) Dimethylolpropionsäure versetzt. Nach 45 Minuten wird mit 200 Teilen Aceton verdünnt und bei 90°C mit 34,11 Teilen (0,46 Mol) n-Butanol versetzt. Nach 70 Minuten beträgt der NCO-Wert 0,0 %. Das Reaktionsprodukt wird anschließend im Trockenschrank vom Lösungsmittel befreit und als Feststoff erhalten.

Zur Überführung in eine wäßrige Dispersion oder Lösung wird der Feststoff in brockiger oder pulveriger Form zu einer dem gewünschten Feststoffgehalt entsprechenden Menge einer Lösung von Triethylamin in Wasser gegeben und verrührt. Die Feinteiligkeit der Lösung oder Dispersion kann mit Hilfe der eingesetzten Menge Triethylamin bestimmt werden.

Versetzt man 87 Teile des erhaltenen Feststoffes in pulverisierter Form mit einer Lösung von 12,94 Teilen (0,128 Mol) Triethylamin in 233 Teilen Wasser, so erhält man eine schwach opake Lösung mit einem Feststoffgehalt von 30 %. Versetzt man 89,7 Teile des erhaltenen Feststoffs in pulveriger Form mit einer Lösung von 10,34 Teilen (0,102 Mol) Triethylamin in 233 Teilen Wasser, so erhält man eine feinteilige Dispersion mit einem Feststoffgehalt von 30 %.

**Beispiel 7**

87 Teile (0,5 Mol) 2,4-Toluylen-diisocyanat werden in 50 Teilen Aceton gelöst, bei Raumtemperatur mit 0,02 Teilen eines Gemisches aus 1-Methyl-1-phospha-2-cyclopenten-1-oxid und 1-Methyl-1-phospha-3-cyclopenten-1-oxid versetzt und auf 80°C erhitzt. Der Carbodiimidisierungsgrad kann an der $CO_2$-Entwicklung und am Abfall des NCO-Gehaltes verfolgt werden. Bei einem NCO-Gehalt von 16,8 % wird auf 60°C abgekühlt und mit 0,2 Teilen Phosphortrichlorid abgestoppt. Nach weiteren 30 Minuten stellt sich ein konstanter NCO-Wert ein.
Analyse des Reaktionsproduktes
NCO-Wert: 16,75 %
NCN-Einheiten pro Molekül (Durchschnittswert): 0,98
Das erhaltene Reaktionsgemisch wird bei 80°C mit 47,2 Teilen (0,17 Mol) Stearinsäure versetzt und 1 Stunde bei 80°C verrührt.
Analyse des Reaktionsproduktes
Säurezahl: 0,0
Anschließend werden bei 80°C 24,9 Teile (0,143 Mol) 2,4-Toluylen-diisocyanat zugegeben und 10 Minuten gerührt. Danach wird mit 51,1 Teilen (0,38 Mol) Dimethylolpropionsäure versetzt und mit 200 Teilen Aceton

verdünnt. Bei einem NCO-Wert von 0,3 % wird bei 70° C mit 38,52 Teilen (0,38 Mol) Triethylamin versalzt, nach 10 Minuten mit 555 Teilen Wasser dispergiert und das Lösungsmittel unmittelbar danach abgezogen.

Es entsteht eine leicht opake Lösung mit einem Feststoffgehalt von 27,1 Gew.-%. Der Gehalt des gelösten Polyurethans an Carboxylatgruppen liegt bei 160 Milliäquivalenten pro 100 g Feststoff, der Gehalt an acylierten Harnstoffgruppen liegt bei 5,9 %, bezogen auf Feststoff.

**Beispiel 8**

87 Teile (0,5 Mol) 2,4-Toluylen-diisocyanat werden in 50 Teilen Aceton gelöst, bei Raumtemperatur mit 0,02 Teilen eines Gemisches aus 1-Methyl-1-phospha-2-cyclopenten-1-oxid und 1-Methyl-1-phospha-3-cyclopenten-1-oxid versetzt und auf 80° C erhitzt. Der Carbodiimidisierungsgrad kann an der $CO_2$-Entwicklung und am Abfall des NCO-Gehaltes verfolgt werden. Bei einem NCO-Gehalt von 16,1 % wird auf 60° C abgekühlt und mit 0,02 Teilen Phosphortrichlorid abgestoppt. Nach weiteren 30 Minuten stellt sich ein konstanter NCO-Wert ein.

Analyse des Reaktionsproduktes
NCO-Wert: 16,07 %
NCN-Einheiten pro Molekül (Durchschnittswert): 1,08

Das erhaltene Reaktionsgemisch wird bei 80° C mit 49,2 Teilen (0,17 Mol) Stearinsäure versetzt und 1 Stunde bei 80° C gerührt.

Analyse des Reaktionsproduktes
Säurezahl: 0,0

Anschließend werden bei 80° C 28,71 Teile (0,165 Mol) 2,4-Toluylen-diisocyanat zugegeben und 10 Minuten eingerührt. Danach wird mit 52,3 Teilen (0,39 Mol) Dimethylolpropionsäure sowie 2,22 Teilen (0,03 Mol) n-Butanol versetzt und mit 200 Teilen Aceton verdünnt. Bei einem NCO-Wert von 0,0 Gew.-% wird mit 39,4 Teilen (0,39 Mol) Triethylamin bei 80° C versalzt und nach 10 Minuten mit 580 Teilen Wasser dispergiert und das Lösungsmittel unmittelbar danach abgezogen.

Man erhält eine schwach opake Lösung mit einem Feststoffgehalt von 29,1 Gew.-%. Der Gehalt des gelösten Polyurethans an Carboxylatgruppen liegt bei 158 Milliäquivalenten pro 100 g Feststoff, der Gehalt an acylierten Harnstoffgruppen liegt bei 5,9 %, bezogen auf Feststoff.

**Beispiel 9**

87,0 Teile (0,5 Mol) 2,4-Toluylen-diisocyanat werden in 50 Teilen Aceton gelöst, bei Raumtemperatur mit 0,03 Teilen eines Gemisches aus 1-Methyl-1-phospha-2-cyclopenten-1-oxid und 1-Methyl-1-phospha-3-cyclopenten-1-oxid versetzt und auf 80° C erhitzt. Der Carbodiimidisierungsgrad kann an der $CO_2$-Entwicklung und am Abfall des NCO-Gehaltes auf 60° C abgekühlt und verfolgt werden. Bei einem NCO-Gehalt von 9,0 % wird auf 60° C abgekühlt und mit 0,1 Teilen Phosphortrichlorid abgestoppt. Nach weiteren 30 Minuten stellt sich ein konstanter NCO-Wert ein.

Analyse des Reaktionsproduktes
NCO-Wert: 8,79 Gew.-%
NCN-Einheiten pro Molekül (Durchschnittswert): 2,96

Das erhaltene Reaktionsgemisch wird bei 80° C mit 70,9 Teilen (0,249 Mol) Stearinsaure versetzt und 2 Stunden bei 80° C verrührt.

Analyse des Reaktionsproduktes
NCO-Wert: 5,92 %
Säurezahl: 0,0

Anschließend werden bei 80° C 33,1 Teile (0,19 Mol) 2,4-Toluylen-diisocyanat zugegeben und 10 Minuten eingerührt. Bei 80° C werden 64,35 Teile (0,715 Mol) Butandiol-1,4 eingerührt und während 60 Minuten nachgerührt. Danach wird mit 33,75 Teilen (0,357 Mol) Bernsteinsäureanhydrid gelöst in 50 Teilen Aceton, versetzt. Nach 90 Minuten Reaktionszeit bei 80° C wird auf 60° C abgekühlt und mit 36,1 Teilen (0,377 Mol) Triethylamin versalzt. Nach 10 Minuten wird mit 725 Teilen Wasser dispergiert und das Aceton unmittelbar danach abgezogen.

Man erhält eine feinteilige Dispersion mit einem Feststoffgehalt von 28,6 Gew.-%. Der Gehalt des dispergierten Polyurethans an Carboxylatgruppen liegt bei 116 Milliäquivalenten pro 100 g Feststoff, der Gehalt an acylierten Harnstoffgruppen liegt bei 6,9 %, bezogen auf Feststoff

**Beispiel 10**

87,0 Teile (0,5 Mol) 2,4-Toluylen-diisocyanat werden in 50 Teilen Aceton gelöst, bei Raumtemperatur mit 0,05 Teilen eines Gemisches aus 1-Methyl-1-phospha-2-cyclopenten-1-oxid und 1-Methyl-1-phospha-3-cyclo-

penten-1-oxid versetzt und auf 80°C erhitzt. Der Carbodiimidisierungsgrad kann an der $CO_2$-Entwicklung und am Abfall des NCO-Gehaltes verfolgt werden. Bei einem NCO-Gehalt von 7,83 % wird auf 60°C abgekühlt und mit 0,1 Teilen Phosphortrichlorid abgestoppt. Nach weiteren 30 Minuten stellt sich ein konstanter NCO-Wert ein.

Analyse des Reaktionsproduktes
NCO-Wert: 7,85 %
NCN-Einheiten pro Molekül (Durchschnittswert): 3,46

Das erhaltene Reaktionsgemisch wird bei 80°C mit 73,8 Teilen (0,26 Mol) Stearinsäure versetzt und 80 Minuten bei 85°C verrührt.

Analyse des Reaktionsproduktes
NCO-Wert: 5,8 Gew.-%
Säurezahl: 0,0

Anschließend wird mit 300 Teilen Aceton verdünnt, auf Raumtemperatur abgekühlt und 27,9 Teile (0,266 Mol) Diethanolamin werden zugegeben. Durch die exotherme Reaktion steigt die Temperatur und wird auf 80°C gehalten. Nach 30 Minuten wird bei 80°C mit 106,3 Teilen (1,06 Mol) Bernsteinsäureanhydrid versetzt. Nach weiteren 30 Minuten wird auf 60°C abgekühlt und mit 107,4 Teilen (1,06 Mol) Triethylamin versalzt. Nach 10 Minuten wird mit 1525 Teilen Wasser verrührt und das Aceton unmittelbar anschließend abgezogen.

Man erhält eine klare Lösung mit einem Feststoffgehalt von 17 Gew.-%. Der Gehalt des gelösten Polyurethans an Carboxylatgruppen liegt bei 277 Milliäquivalenten pro 100 g Feststoff, der Gehalt an acylierten Harnstoffgruppen liegt bei 5,7 %, bezogen auf Feststoff.

**Beispiel 11**

87,0 Teile (0,5 Mol) 2,4-Toluylen-diisocyanat werden mit 11,24 Teilen (0,125 Mol) Butandiol-1,4 versetzt und bei 80°C bis zu einem konstanten NCO-Wert von 32,04 % zur Reaktion gebracht. Es wird auf 60°C abgekühlt, mit 100 Teilen Aceton verdünnt, mit 0,05 Teilen eines Gemisches aus 1-Methyl-1-phospha-2-cyclopenten-1-oxid und 1-Methyl-1-phospha-3-cyclopenten-oxid versetzt und wieder auf 80°C aufgeheizt. Die Carbodiimidisierung kann an der $CO_2$-Entwicklung und am Abfall des NCO-Wertes verfolgt werden. Bei einem NCO-Gehalt von 4,8 % wird auf 60°C abgekühlt und mit 0,2 Teilen Phosphortrichlorid abgestoppt. Nach weiteren 30 Minuten stellt sich ein konstanter NCO-Wert von 4,58 % ein.

Das erhaltene Reaktionsgemisch wird bei 80°C mit 51,75 Teilen (0,182 Mol) Stearinsäure versetzt und 60 Minuten verrührt.

Analyse des Reaktionsproduktes:
Säurezahl: 0,0

Anschließend werden 21,38 Teile (0,204 Mol) Diethanolamin zugegeben und bei 80°C bis zu einem NCO-Wert von NCO = 0,0 % verrührt. Danach wird mit 60,26 Teilen (0,407 Mol) Phthalsäureanhydrid versetzt, nach 30 Minuten auf 60°C abgekühlt und mit 41,1 Teilen (0,407 Mol) Triethylamin versalzt. Nach 10 Minuten wird mit 610 Teilen Wasser verrührt und das Aceton unmittelbar anschließend abgezogen. Es entsteht eine klare Lösung mit einem Feststoffgehalt von 27 %. Der Gehalt des gelösten Polyurethans an Carboxylatgruppen liegt bei 165 Milliäquivalenten pro 100 g Feststoff, der Gehalt an acylierten Harnstoffgruppen liegt bei 5,9 %, bezogen auf Feststoff.

**Beispiel 12**

400 Teile (2,3 Mol) einer Mischung aus 2,4-Toluylen-diisocyanat und 2,6-Toluylendiisocyanat im Verhältnis 65: 35 werden in 100 Teilen Aceton gelöst, bei Raumtemperatur mit 0,1 Teilen eines Gemisches aus 1-Methyl-1-phospha-2-cyclopenten-1-oxid und 1-Methyl-1-phospha-3-cyclopenten-1-oxid versetzt und auf 80°C erhitzt. Der Carbodiimidisierungsgrad kann an der $CO_2$-Entwicklung und am Abfall des NCO-Wertes verfolgt werden. Bei einem NCO-Gehalt von 22,3 % wird auf 60°C abgekühlt und mit 0,2 Teilen Phosphortrichlorid abgestoppt. Nach weiteren 30 Minuten stellt sich ein konstanter NCO-Wert ein.

Analyse des Reaktionsproduktes:
NCO-Wert: 20,6 %
NCN-Einheiten pro Molekül (Durchschnittswert): 1,09

Anschließend wird das Reaktionsprodukt mit 228 Teilen (0,801 Mol) Stearinsäure versetzt, bei 80°C bis zur Säurezahl 0,0 zur Reaktion gebracht und das Aceton abgezogen.

Analyse des Reaktionsproduktes:
Säurezahl: 0,0
NCO-Wert: 15,9 Gew.-%

79,7 Teile eines Polyesterdiols aus Phthalsäure und Ethylenglykol (OH-Zahl = 287,7), 53,4 Teile eines Polyesterdiols aus Phthalsäure, Adipinsäure (im Gewichtsverhältnis 1 : 1) und Ethylenglykol (OH-Zahl 64,1), 22,9 Teile eines auf Butanol gestarteten Polyethylenoxidpolypropylenoxid-polyethers (OH-Zahl 26; 73,3 %

Ethylenoxid) und 21,5 Teile eines propoxylierten Adduktes aus 2-Butendiol-1,4 und $NaHSO_3$ (MG: 430; 70 %-ig in Toluol) werden 30 Minuten bei 110°C im Wasserstrahlvakuum entwässert. Es wird auf 80°C abgekühlt und mit 53,9 Teilen (0,21 Mol) Bis-(4-isocyanato-cyclohexyl)-methan, 23,1 Teilen (0,14 Mol) Hexamethylendiisocyanat sowie 46,5 Teilen des obengenannten, acylierte Harnstoffgruppen aufweisenden Polyisocyanats versetzt und bis zu einem konstanten NCO-Wert von 4,05 % verrührt. Anschließend wird auf 70°C abgekühlt und mit 19,1 Teilen (0,28 Mol) 25 %-iger wäßriger Ammoniaklösung, gelöst in 100 Teilen Wasser, versetzt. Nach 15 Minuten bei 70°C 15 wird mit 584 Teilen Wasser dispergiert, nach weiteren 15 Minuten bei 50°C mit 18,6 Teilen 30 %-iger wäßriger Formaldehyd-Lösung versetzt und 1 h bei 50°C nachgerührt.

Es entsteht eine feinteilige Dispersion mit einem pH-Wert 20 von 6,5 und einem Feststoffgehalt von 28 %. Der dispergierte Feststoff weist einen Gehalt an Sulfonatgruppen von 11,5 Milliäquivalenten pro 100 g, an innerhalb einer Polyetherkette eingebauten Ethylenoxideinheiten von 5,9 % und einen Gehalt an acylierten Harnstoffgruppen von 0,97 % auf.

**Beispiel 13**

400 Teile (2,3 Mol) einer Mischung aus 2,4-Toluylen-diisocyanat und 2,6-Toluylen-diisocyanat im Verhältnis 65: 35 werden in 100 Teilen Aceton gelöst, bei Raumtemperatur mit 0,1 Teilen eines Gemisches aus 1-Methyl-1-phospha-2-cyclopenten-1-oxid und 1-Methyl-1-phospha-3-cyclopenten-1-oxid versetzt und auf 80°C erhitzt. Der Carbodiimidisierungsgrad kann an der $CO_2$-Entwicklung und am Abfall des NCO-Wertes verfolgt werden. Bei einem NCO-Gehalt von 21,86 % wird auf 60°C abgekühlt und mit 0,2 Teilen Phosphortrichlorid abgestoppt. Nach weiteren 30 Minuten stellt sich ein konstanter NCO-Wert ein.

Analyse des Reaktionsproduktes:
NCO-Wert: 21,12 %
NCN-Einheiten pro Molekül (Durchschnittswert): 1,04

Anschließend wird das Reaktionsprodukt mit 56,2 Teilen (0,78 Mol) Acrylsäure versetzt, bei 80°C bis zur Säurezahl 0,0 zur Reaktion gebracht und das Aceton abgezogen.

Analyse des Reaktionsproduktes:
Säurezahl: 0,0
NCO-Wert: 22,3 %

79,7 Teile eines Polyesterdiols aus Phthalsäure und Ethylenglykol (OH-Zahl: 287,7), 53,4 Teilen des Polyesterdiols gemäß Beispiel 12 aus Phthalsäure, Adipinsäure und Ethylenglykol (OH-Zahl: 64,1), 21,2 Teilen eines auf Butanol gestarteten Polyethylenoxid-polypropylenoxidpolyethers (OH-Zahl: 26; 73,3 % Ethylenoxid) und 19,7 Teile eines propoxylierten Adduktes aus 2-Butendiol-1,4 und $NaHSO_3$ (MG: 430; 70 %-ig in Toluol) werden 30 Minuten bei 110°C im Wasserstrahlvakuum entwässert. Es wird auf 80°C abgekühlt und mit 53,3 Teilen (0,20 Mol) Bis-(4-isocyanatocyclohexyl)-methan, 22,9 Teilen (0,14 Mol) Hexamethylendiisocyanat sowie 25,6 Teilen des obengenannten, Acylharnstoff-Diisocyanats versetzt und bis zu einem konstanten NCO-Wert von 3,97 % verrührt. Anschließend wird auf 70°C abgekühlt und mit 17,3 Teilen (0,25 Mol) 25 %-iger wäßriger Ammoniaklösung, gelöst in 100 Teilen Wasser, versetzt. Nach 15 Minuten bei 70°C wird mit 526 Teilen Wasser dispergiert, nach weiteren 15 Minuten bei 50°C mit 18,6 Teilen 30 %-iger wäßriger Formaldehyd-Lösung versetzt und 1 Stunde bei 50°C nachgerührt.

Es entsteht eine feinteilige Dispersion mit einem pH-Wert von 7,0 und einem Feststoffgehalt von 28,8 %. Der dispergierte Feststoff weist einen Gehalt an Sulfonatgruppen von 11,5 Milliäquivalenten pro 100 g, an innerhalb einer Polyetherkette eingebauten Ethylenoxideinheiten von 5,9 % und einen Gehalt an acylierten Harnstoffgruppen von 1,5 % auf.

**Beispiel 14**

870 Teile (5,0 Mol) einer Mischung aus 2,4-Toluylen-diisocyanat und 2,6-Toluylen-diisocyanat im Verhältnis 65: 35 werden bei Raumtemperatur mit 0,1 Teilen eines Gemisches aus 1-Methyl-1-phospha-2-cyclopenten-1-oxid und 1-Methyl-1-phospha-3-cyclopenten-1-oxid versetzt und auf 80°C erhitzt. Der Carbodiimidisierungsgrad kann an der $CO_2$-Entwicklung und am Abfall des NCO-Wertes verfolgt werden. Bei einem NCO-Gehalt von 28,1 % wird auf 60°C abgekühlt und mit 0,6 Teilen Phosphortrichlorid abgestoppt. Nach weiteren 30 Minuten stellt sich ein konstanter NCO-Wert ein.

Analyse des Reaktionsproduktes:
NCO-Wert: 27,7 %
NCN-Einheiten pro Molekül (Durchschnittswert): 1,0

150 Teile des erhaltenen Carbodiimids werden mit 33,5 Teilen (0,25 Mol) Phenylessigsäure versetzt und bei 80°C bis zur Säurezahl 0,0 zur Reaktion gebracht.

Analyse des Reaktionsproduktes:
Säurezahl: 0,0

NCO-Wert: 19,4 Gew.-%

79,7 Teile eines Polyesterdiols aus Phthalsäure und Ethylenglykol (OH-Zahl: 287,7), 53,4 Teile eines Polyesterdiols aus Phthalsäure, Adipinsäure (im Gewichtsverhältnis 1 : 1) und Ethylenglykol (OH-Zahl = 64,1), 22,9 Teile eines auf Butanol gestarteten Polyethylenoxidpolypropylenoxid-polyethers (OH-Zahl = 26; 73, 3 % Ethylenoxid) und 21,5 Teile eines propoxylierten Adduktes aus 2-Butendiol-1,4 und $NaHSO_3$ (MG: 430; 70 %-ig in Toluol) werden 30 Minuten bei 110°C im Wasserstrahlvakuum entwässert. Es wird auf 80°C abgekühlt und mit 54,1 Teilen (0,21 Mol) Bis-(4-isocyanatocyclohexyl)-methan, 30,8 Teilen (0,18 Mol) Hexamethylendiisocyanat sowie 12,5 Teilen des obengenannten, acylierte Harnstoffgruppen aufweisenden Polyisocyanats versetzt und bis zu einem konstanten NCO-Wert von 4,2 % verrührt. Anschließend wird auf 70°C abgekühlt und mit 18,2 Teilen (0,27 Mol) 25 %-iger wäßriger Ammoniaklösung, gelöst in 100 Teilen Wasser, versetzt. Nach 15 Minuten bei 70°C wird mit 540 Teilen Wasser dispergiert, nach weiteren 15 Minuten bei 50°C mit 12,6 Teilen 30 %-iger wäßriger Formaldehyd-Lösung versetzt und 1 h bei 50°C nachgerührt

Es entsteht eine feinteilige Dispersion mit einem pH-Wert von 7,5 und einem Feststoffgehalt von 30 %. Der dispergierte Feststoff weist einen Gehalt an Sulfonatgruppen von 12,6 Milliäquivalenten pro 100 g, an innerhalb einer Polyetherkette eingebauten Ethylenoxideinheiten von 6,5 % und einen Gehalt an acylierten Harnstoffgruppen von 0,59 % auf.

## Beispiel 15

150 Teile des Carbodiimids aus Beispiel 14 werden mit 30 Teilen (0,246 Mol) Benzoesäure versetzt und bei 80°C bis zur Säurezahl 0,0 zur Reaktion gebracht.

Analyse des Reaktionsproduktes:

Säurezahl: 0,0

NCH-Wert: 20,4 Gew.-%

79,7 Teile eines Polyesterdiols aus Phthalsäure und Ethylenglykol (OH-Zahl 287,7), 53,4 Teile eines Polyesterdiols aus Phthalsäure, Adipinsäure (im Gewichtsverhältnis 1 : 1) und Ethylenglykol (OH-Zahl 64,1), 22,9 Teile eines auf Butanol gestarteten Polyethylenoxidpolypropylenoxid-polyethers (OH-Zahl = 26; 73,3 % Ethylenoxid) und 21,5 Teile eines propoxylierten Adduktes aus 2-Butendiol-1,4 und $NaHSO_3$ (MG: 430; 70 %-ig in Toluol) werden 30 Minuten bei 110°C im Wasserstrahlvakuum entwässert. Es wird auf 80°C abgekühlt und mit 54,1 Teilen (0,21 Mol) Bis-(4-isocyanatocyclohexyl)-methan, 30,8 Teilen (0,18 Mol) Hexamethylendiisocyanat sowie 13,5 Teilen des obengenannten, acylierte Harnstoffgruppen aufweisenden Polyisocyanats versetzt und bis zu einem konstanten NCO-Wert von 4,15 % verrührt. Anschließend wird auf 70°C abgekühlt und mit 18,1 Teilen (0,27 Mol) 25 %-iger wäßriger Ammoniaklösung, gelöst in 100 Teilen Wasser, versetzt. Nach 15 Minuten bei 70°C wird mit 540 Teilen Wasser dispergiert, nach weiteren 15 Minuten bei 50°C mit 12 Teilen 30 %-iger wäßriger Formaldehyd-Lösung versetzt und 1 h bei 50°C nachgerührt.

Es entsteht eine feinteilige Dispersion mit einem pH-Wert von 7,5 und einem Feststoffgehalt von 28 %. Der dispergierte Feststoff weist einen Gehalt an Sulfonatgruppen von 12,6 Milliäquivalenten pro 100 g, an innerhalb einer Polyetherkette eingebauten Ethylenoxideinheiten von 6,5 % und einen Gehalt an acylierten Harnstoffgruppen von 0,98 % auf.

## Beispiel 16

87 Teile (0,5 Mol) 2,4-Diisocyanatotoluol werden in 60 Teilen Aceton gelöst, bei Raumtemperatur mit 0,02 Teilen eines Gemischs aus 1-Methyl-1-phospha-2-cyclopenten-1-oxid und 1-Methyl-1-phospha-3-cyclopenten-1-oxid versetzt und auf 80°C erhitzt. Der Carbodiimidisierungsgrad kann an der Kohlendioxidentwicklung und am Abfall des NCO-Gehalts verfolgt werden. Bei einem NCO-Gehalt von 12,1 % wird auf 60°C abgekühlt und mit 0,05 Teilen Phosphortrichlorid abgestoppt. Nach weiteren 30 Minuten stellt sich ein konstanter NCO-Wert ein.

Analyse des Reaktionsprodukts:

NCO-Gehalt: 11,6 %

NCN-Einheiten pro Molekül (Durchschnittswert): 1,96

Das erhaltene Reaktionsgemisch wird bei 80°C mit 80,3 Teilen (0,25 Mol) Safacidsäure (hydriertes Heringsöl, Säurezahl 173,4) versetzt und solange zur Reaktion gebracht, bis keine freie Säure mehr nachweisbar ist. Anschließend werden 7,61 Teile 1,4-Dihydroxybutan (0,085 Mol) zugegeben. Nach 2 Stunden bei 80°C wird mit 17,8 Teilen (0,17 Mol) Diethanolamin in 200 Teilen Aceton versetzt. Bei einem NCO-Gehalt von 0 % werden 33,8 Gew.-Teile Bernsteinsäureanhydrid (0,338 Mol) zugegeben. Nach 35 Minuten wird auf 70°C abgekühlt, mit 34,2 Teilen (0,338 Mol) Triethylamin versalzt und nach 10 Minuten mit 575 Teilen Wasser dispergiert. Das Aceton wird unmittelbar anschließend im Vakuum abgezogen. Es entsteht eine klare Lösung mit einem Feststoffgehalt von 27,4 %. Der gelöste Feststoff weist einen Gehalt an Carboxylatgruppen von 137 Milliäquivalenten pro 100 g und einen Gehalt an acylierten Harnstoffgruppen von 8,6 % auf. Das rechnerische Molekulargewicht liegt bei 2910.

**Beispiel 17**

161 Teile (0,925 Mol) einer Mischung aus 2,4-Diisocyanatotoluol und 2,6-Diisocyanatotoluol (Gewichtsverhältnis 65 : 35) werden bei Raumtemperatur mit 0,2 Teilen einer Mischung des in Beispiel 16 genannten Dimerisierungskatalysators versetzt und auf 80°C erhitzt. Es wird wie in Beispiel 16 beschrieben weiter vorgegangen. Das letztendlich erhaltene ancarbodiimidisierte Diisocyanat weist einen NCO-Gehalt von 19,13 % auf. Es wird mit 100 Teilen Aceton verdünnt. Bei 80°C werden 100,6 Teile (0,356 Mol) Ölsäure zugegeben und solange zur Reaktion gebracht, bis keine freie Säure mehr nachweisbar ist. Anschließend wird mit 13,7 Teilen (0,152 Mol) 1,4-Dihydroxybutan, gelöst in 100 Teilen Aceton, verlängert. Nach 2,5 Stunden wird mit weiteren 200 Teilen Aceton verdünnt und nach weiteren 5 Minuten mit 32,0 Teilen (0,305 Mol) Diethanolamin versetzt. Nach weiteren 15 Minuten werden 60,9 Teile (0,61 Mol) Bernsteinsäureanhydrid zugesetzt und während 60 Minuten bei 80°C verrührt. Anschließend wird mit 61,5 Teilen (0,61 Mol) Triethylamin versalzt und mit 940 Teilen Wasser dispergiert. Es entsteht eine klare Lösung mit einem Feststoffgehalt von 27,4 %. Der Gehalt des Umsetzungsprodukts an Carboxylatgruppen liegt bei 153 Milliäquivalenten pro 100 g Feststoff, der Gehalt an acylierten Harnstoffgruppen liegt bei 7,6 %, bezogen auf Feststoff.

**Beispiel 18**

87,0 Teile (0,5 Mol) 2,4-Toluylen-diisocyanat werden in 50 Teilen Aceton, gelöst bei Raumtemperatur mit 0,05 Teilen eines Gemisches aus 1-Methyl-1-phospha-2-cyclopenten-1-oxid und 1-Methyl-1-phospha-3-cyclopenten-oxid versetzt und auf 80°C erhitzt. Der Carbodiimidisierungsgrad kann an der $CO_2$-Entwicklung und am Abfall des NCO-Gehaltes verfolgt werden. Bei einem NCO-Gehalt von 12,28 % wird auf 60°C abgekühlt und mit 0,2 Teilen Phosphortrichlorid abgestoppt. Nach weiteren 30 Minuten stellt sich ein konstanter NCO-Wert ein.

Analyse des Reaktionsproduktes:
NCO-Wert: 11,6 Gew.-%
NCN-Einheiten pro Molekül (Durchschnittswert): 1,95

Das erhaltene Reaktionsgemisch wird bei 80°C mit 62,9 Teilen (0,221 Mol) Stearinsäure versetzt und 60 Minuten bei 80°C verrührt. Anschließend werden bei 80°C 7,6 Teile (0,084 Mol) Butandiol-1,4 zugegeben. Nach 60 Minuten bei 80°C wird mit 100 Teilen Aceton verdünnt und mit 17,7 Teilen (0,168 Mol) Diethanolamin versetzt. Nach 40 Minuten werden 33,7 Teile (0,337 Mol) Bernsteinsäureanhydrid gelöst, in 100 Teilen Aceton zugegeben und 60 Minuten bei 80°C verrührt. Anschließend wird auf 70°C abgekühlt, mit 34 Teilen (0,337 Mol) Triethylamin versalzt und nach 15 Minuten mit 535 Teilen Wasser verrührt.

Das Aceton wird unmittelbar anschließend abgezogen. Es entsteht eine klare Lösung mit einem Feststoffgehalt von 27 %. Der gelöste Feststoff weist einen Gehalt an Carboxylatgruppen von 147 Milliäquivalenten pro 100 g und einen Gehalt an acylierten Harnstoffgruppen von 8,2 % auf. Das rechnerische Molekulargewicht liegt bei 2700.

**Beispiel 19**

87,0 Teile (0,5 Mol) 2,4-Toluylen-diisocyanat werden in 50 Teilen Aceton gelöst, bei Raumtemperatur mit 0,05 Teilen eines Gemisches aus 1-Methyl-1-phospha-2-cyclopenten-1-oxid und 1-Methyl-1-phospha-3-cyclopenten-1-oxid versetzt und auf 80°C erhitzt. Der Carbodiimidisierungsgrad kann an der $CO_2$-Entwicklung und am Abfall des NCO-Gehaltes verfolgt werden. Bei einem NCO-Gehalt von 9,44 % wird auf 60°C abgekühlt und mit 0,2 Teilen Phosphortrichlorid abgestoppt. Nach weiteren 30 Minuten stellt sich ein konstanter NCO-Wert ein.

Analyse des Reaktionsproduktes:
NCO-Wert: 8,81 %
NCN-Einheiten pro Molekül (Durchschnittswert): 2,95

Das erhaltene Reaktionsgemisch wird bei 80°C mit 70,72 Teilen (0,249 Mol) Stearinsäure versetzt und 60 Minuten bei 80°C verrührt. Anschließend werden bei 80°C 5,72 Teile (0,0635 Mol) Butandiol-1,4, gelöst in 100 Teile Aceton zugegeben. Nach 90 Minuten bei 80°C wird mit 13,3 Teilen (0,127 Mol) Diethanolamin versetzt. Nach weiteren 30 Minuten werden 25,4 Teile (0,254 Mol) Bernsteinsäureanhydrid, gelöst in 100 Teile Aceton, zugegeben und 60 Minuten bei 80°C verrührt. Anschließend wird auf 70°C abgekühlt, mit 25,6 Teilen (0,254 Mol) Triethylamin versalzt und nach 15 Minuten mit 493 Teilen Wasser dispergiert. Das Aceton wird unmittelbar anschließend abgezogen. Es entsteht eine feinteilige Dispersion mit einem Feststoffgehalt von 28,5 %. Der dispergierte Feststoff weist einen Gehalt an Carboxylatgruppen von 120 Milliäquivalenten pro 100 g und einen Gehalt an acylierten Harnstoffgruppen von 10,0 % auf. Das rechnerische Molekulargewicht liegt bei 3300.

**Beispiel 20**

87,0 Teile (0,5 Mol) 2,4-Toluylen-diisocyanat werden bei Raumtemperatur mit 0,05 Teilen eines Gemisches aus 1-Methyl-1-phospha-2-cyclopenten-1-oxid und 1-Methyl-1-phospha-3-cyclopenten-1-oxid versetzt und auf 80°C erhitzt. Der Carbodiimidisierungsgrad kann an der $CO_2$-Entwicklung und am Abfall des NCO-Gehaltes verfolgt werden. Bei einem NCO-Gehalt von 19,35 % wird auf 60°C abgekühlt und mit 0,2 Teilen Phosphortrichlorid abgestoppt. Nach weiteren 30 Minuten stellt sich ein konstanter NCO-Wert ein.

Analyse des Reaktionsproduktes

NCO-Wert: 17,85

NCN-Einheiten pro Molekül (Durchschnittswert): 2,28

Das erhaltene Reaktionsgemisch wird bei 80°C mit 51,9 Teilen (0,499 Mol) Neopentylglykol gelöst in 50 Teilen Toluol versetzt.

Nach 30 Minuten sind keine NCO-Gruppen mehr nachweisbar. Bei weiterhin 80°C werden 57,9 Teile (0,20 Mol) Stearinsäure zugegeben und 100 Minuten bis zur völligen Umsetzung der Säuregruppen (Säurezahl 0,0) verrührt. Anschließend werden bei 90°C 310,8 Teile 2,4-Toluylen-diisocyanat (0,179 Mol) und nach 5 Minuten 115,0 Teile (0,858 Mol) Dimethylolpropionsäure sowie 1 Teil (0,0016 Mol) Dibutylzinndilaurat zugegeben. Nach weiteren 40 Minuten werden bei 90°C 88,26 Teile (1,19 Mol) n-Butanol in 100 Teile Toluol zugegeben. Nach 90 Minuten beträgt der NCO-Wert 0,0 %. Es wird auf 70°C abgekühlt und mit 86,7 Teilen (0,858 Mol) Triethylamin versalzt. Nach 30 Minuten bei 70°C wird mit 1860 Teilen Wasser dispergiert und das Lösungsmittel anschließend sofort abdestilliert.

Es entsteht eine feinteilige Dispersion mit einem Feststoffgehalt von 29,4 %. Der dispergierte Feststoff weist einen Gehalt an Carboxylatgruppen von 110 Milliäquivalenten pro 100 g und einen Gehalt an acylierten Harnstoffgruppen von 2,2 % auf. Das rechnerische Molekulargewicht liegt bei 1330.

**Beispiel 21**

87,0 Teile (0,5 Mol) 2,4-Toluylen-diisocyanat werden in 50 Teile Aceton gelöst, bei Raumtemperatur mit 0,05 Teilen eines Gemisches aus 1-Methyl-1-Phospha-2-cyclopenten-1-oxid und 1-Methyl-1-phospha-3-cyclopenten-1-oxid versetzt und auf 80°C erhitzt. Der Carbodiimidisierungsgrad kann an der $CO_2$-Entwicklung und am Abfall des NCO-Gehaltes verfolgt werden. Bei einem NCO-Gehalt von 11,28 % wird auf 60°C abgekühlt und mit 0,2 Teilen Phosphortrichlorid abgestoppt. Nach weiteren 30 Minuten stellt sich ein konstanter NCO-Wert ein.

Analyse des Reaktionsproduktes:

NCO-Wert: 10,84 %

NCN-Einheiten pro Molekül (Durchschnittswert): 2,17

Das erhaltene Reaktionsgemisch wird bei 80°C mit 62,9 Teilen (0,221 Mol) Stearinsäure versetzt und 80 Minuten zur Reaktion gebracht. Anschließend werden bei 80°C 37,4 Teile (0,36 Mol) Neopentylglykol, gelöst in 50 Teilen Aceton, zugegeben. Nach 45 Minuten bei 80°C wird mit 179 Teilen (1,03 Mol) 2,4-Toluylen-diisocyanat und nach weiteren 5 Minuten mit 82 Teilen (0,612 Mol) Dimethylolpropionsäure versetzt. Nach 30 Minuten bei 90°C wird mit 200 Teilen Aceton verdünnt und nach weiteren 100 Minuten werden 35,2 Teile (0,475 Mol) n-Butanol zugegeben. Nach 2 h bei 90°C wird mit 61,8 Teilen (0,612 Mol) Triethylamin versalzt und nach 10 Minuten mit 1232 Teilen Wasser verrührt. Das Aceton wird unmittelbar anschließend abgezogen. Es entsteht eine klare Lösung mit einem Feststoffgehalt von 29,6 Gew.-%. Der gelöste Feststoff weist einen Gehalt an Carboxylatgruppen von 113 Milliäquivalenten pro 100 g und einen Gehalt an acylierten Harnstoffgruppen von 4,6 % auf. Das rechnerische Molekulargewicht liegt bei 2260.

**Beispiel 22**

87,0 Teile (0,5 Mol) 2,4-Toluylen-diisocyanat werden in 50 Teilen Aceton gelöst, bei Raumtemperatur mit 0,05 Teilen eines Gemisches aus 1-Methyl-1-phospha-2-cyclopenten-1-oxid und 1-Methyl-1-phospha-3-cyclopenten-1-oxid versetzt und auf 80°C erhitzt. Der Carbodiimidisierungsgrad kann an der $CO_2$-Entwicklung und am Abfall des NCO-Gehaltes verfolgt werden. Bei einem NCO-Gehalt von 11,05 % wird auf 60°C abgekühlt und mit 0,2 Teilen Phosphortrichlorid abgestoppt. Nach weiteren 30 Minuten stellt sich ein konstanter NCO-Wert ein.

Analyse des Reaktionsproduktes:

NCO-Wert: 10,72 Gew.-%

NCN-Einheiten pro Molekül (Durchschnittswert): 2,21

Das erhaltene Reaktionsgemisch wird bei 80°C mit 63,5 Teilen (0,223 Mol) Stearinsäure versetzt und 90 Minuten bei 80°C zur Reaktion gebracht. Anschließend wird bei 80°C mit 30,73 Teilen (0,342 Mol) Butandiol-1,4 versetzt. Nach 70 Minuten bei 80°C wird auf 90°C aufgeheizt und es werden 144,7 Teile (0,832 Mol) 2,4-Toluylen-diisocyanat und nach 5 Minuten 70 Teile Dimethylolpropionsäure zugegeben. Nach 30 Minuten wird mit 200 Teilen Aceton verdünnt und nach weiteren 135 Minuten mit 20,6 Teilen (0,277 Mol) n-Butanol versetzt. Es wird 2 Stunden bei 90°C nachgerührt, daß Aceton anschließend abgezogen, das Reaktionsprodukt im

Trockenschrank vom restlichen Lösungsmittel befreit und als Feststoff erhalten.

Zur Überführung in eine wäßrige Dispersion oder Lösung wird der Feststoff in brockiger oder pulvriger Form zu einer dem gewünschten Feststoffgehalt entsprechenden Menge einer Lösung von Triethylamin in Wasser gegeben und verrührt. Die Feinteiligkeit der Lösung oder Dispersion kann mit Hilfe der eingesetzten Menge Triethylamin bestimmt werden.

Versetzt man 30 Teile des erhaltenen Feststoffs in pulverisierter Form mit einer Lösung von 3,86 Teilen Triethylamin in 79,02 Teilen Wasser, so erhält man eine klare Lösung mit einem Feststoffgehalt von 30 %. Der Feststoff der so erhaltenen Lösung enthält 127 Milliäquivalente pro 100 g an Carboxylatgruppen und 3.1 % an eingebauten Acylharnstoffgruppen.

Die gemäß Beispielen 18 bis 22 hergestellten Dispersionen oder Lösungen werden nachstehend bezüglich ihrer Eignung als Leimungsmittel für Papier untersucht. Zum Vergleich wurde das Leimungsmittel gemäß Beispiel 4 der DE-AS-2 457 972 herangezogen.

**Schaumverhalten**

Zur Bestimmung des Schaumverhaltens der erfindungsgemäßen Leimungsmittel wurden diese in einer Laborschaumprüfapparatur untersucht, welche die Verhältnisse an der Leimpresse einer Papiermaschine ungefähr wiedergibt. Bei diesem Gerät wird die Leimungsflotte, die das zu prüfende Leimungsmittel, Stärke und eventuell weitere Zusätze enthält, aus einem thermostatisierten Becherglas mit konstanter Fördergeschwindigkeit durch eine am Boden dieses Becherglases befindliche Leitung abgesaugt und durch ein Stahlrohr, das durch den Deckel des Becherglases geführt ist, wieder in dasselbe zurückgepumpt. Dieses Stahlrohr endet 150 mm über der Flüssigkeitsoberfläche, so daß die Leimungsflotte im direkten Strahl auf die Flüssigkeitsoberfläche auftritt, wodurch eine Schaumbildung verursacht werden kann. Das nach einer bestimmten Versuchszeit über der Oberfläche der Leimungsflotte gemessene Schaumvolumen in ml stellt somit ein Maß für die Schaumneigung der zu untersuchenden Flüssigkeit dar.

Die folgende Tabelle gibt eine Übersicht über das mit Hilfe der obengenannten Prüfapparatur untersuchte Schaumverhalten der beschriebenen Lösungen oder Dispersionen gemäß Beispielen 18 bis 22 im Vergleich zu dem gemäß DE-AS-2 457 972 hergestellten Produkt. Dazu wurden jeweils 700 ml einer wäßrigen Leimungsmittelflotte hergestellt, die 5 % einer handelsüblichen Stärke und 0,3 % des zu untersuchenden Leimungsmittels enthielt. Die Lösungen wurden bei 60°C und mit einer Geschwindigkeit von 200 l/h durch die Prüfapparatur gepumpt. In Abständen von jeweils 5 min wurde das sich im Verlauf der Prüfung über der Flüssigkeitsoberfläche aufbauende Schaumvolumen in ml gemessen.

**Tabelle 1**

| | Schaumvolumen in ml nach einer Versuchszeit: | | | | | |
|---|---|---|---|---|---|---|
| | 5 | 10 | 15 | 20 | 25 | 30 Min. |
| Vergleich | 300 | 500 | 800 | 1000 | 1200 | 1500 |
| Leimungsmittel (18) | 0 | 0 | 0 | 0 | 0 | 0 |
| Leimungsmittel (19) | 0 | 0 | 0 | 0 | 0 | 0 |
| Leimungsmittel (20) | 0 | 0 | 0 | 50 | 80 | 100 |
| Leimungsmittel (21) | 0 | 0 | 0 | 0 | 50 | 70 |
| Leimungsmittel (22) | 0 | 0 | 0 | 0 | 0 | 0 |

**Anwendungsbeispiele**

Die Anwendungsbeispiele sollen die gute Leimungswirkung der erfindungsgemäßen Leimungsmittel auf Papieren unterschiedlicher stofflicher Zusammensetzung demonstrieren. Als Maß für die spezielle Leimung wurde dabei der Cobb-Wert (nach 53 132) bestimmt.

Die verwendeten Papiere hatten die folgende Zusammensetzung:

a) **Alaunfreies Papier**

50 % Nadelholzzellsoff, 50 % Laubholzzellstoff, 10,5 % Clay-Asche, pH-Wert im Stoffauflauf: 7,3; Naßaufnahme in einer Laborleimpresse: ca. 80 %; Papiergewicht: 80 g/m$^2$.

b) **Alaunhaltiges Papier**

50 % Nadelholzzellsoff, 50 % Laubholzzellstoff, 1 % Alaun, 11,8 % Clay-Asche, pH-Wert im Stoffauflauf: 4,4; Naßaufnahme: ca. 80 %, Papiergewicht: 80 g/m².

c) **Vorgeleimtes Papier**

50 % Nadelholzzellstoff, 50 % Laubholzzellstoff, 1 % Alaun, 0,1 % Bewoidleim, 11,9 % Clay-Asche, pH-Wert im Stoffauflauf: 4,5; Naßaufnahme: ca. 60 %; Papiergewicht: 80 g/m².

d) **Kreidehaltiges Papier**

50 % Nadelholzzellstoff, 50 % Laubholzzellstoff, 10,9 % Kreide-Asche, pH-Wert im Stoffauflauf: 7,5; Naßaufnahme: ca. 90 %; Papiergewicht: 75 g/m².

e) **Holzhaltiges Papier**

40 % Nadelholzzellstoff, 60 % Holzschliff, 12,0 % Clay-Asche, pH-Wert im Stoffauflauf: 4,5; Naßaufnahme: ca. 40 %; Papiergewicht: 75 g/m².

Die Leimung der Papiere erfolgte auf einer Laborleimpresse der Fa. Mathis, Zürich/Schweiz, Type HF. Als Leimungsflotte wurde eine Lösung von 5 Gew.-% handelsüblicher Stärke und 0,2 bis 0,6 Gew.-% des zu prüfenden Leimungsmittels (berechnet als 100 %-ige Wirksubstanz) in Wasser verwendet.

Die Trocknung der oberflächengeleimten Papiere erfolgte auf einem Trockenzylinder innerhalb einer Minute bei ca. 100°C. Vor der Leimungsprüfung wurden die Papiere 2 h bei Raumtemperatur klimatisiert.

**Tabelle 2**

Leimungsprüfung: g/m² Wasseraufnahme in 60 sec. nach DIN 53 132

| | | | Leimungsmitteltyp: | | | | |
|---|---|---|---|---|---|---|---|
| Papiersorte | Einsatzmenge %/Flotte | V | 18 | 19 | 20 | 21 | 22 |
| a) alaunfrei | 0,4 % | 27,2 | 25,3 | 27,0 | 30,4 | 29,5 | 23,4 |
| b) alaunhaltig | 0,2 % | 21,7 | 20,8 | 22,1 | 22,8 | 22,4 | 24,3 |
| c) vorgeleimt | 0,2 % | 19,3 | 20,1 | 19,5 | 19,1 | 19,5 | 20,3 |
| d) kreidehaltig | 0,6 % | 25,7 | 26,3 | 24,9 | 27,0 | 28,3 | 24,3 |
| e) holzhaltig | 0,2 % | 19,1 | 18,9 | 19,4 | 18,7 | 19,0 | 19,1 |

V = Vergleichssubstanz, Beispiel 4 aus DE-OS-2 457 972

Angegeben werden die Cobb-Werte in g/m² Wasseraufnahme in 60 Sekunden, bestimmt nach DIN 53 132. Cobb-Wert bedeutet bessere Leimungswirkung.

**Patentansprüche**

1. Wäßrige Lösungen oder Dispersionen von Polyisocyanat-Additionsprodukten, die einen ihre Löslichkeit oder Dispergierbarkeit in Wasser gewährleistenden Gehalt an eingebauten Sulfonat- und/oder Carboxylatgruppen, sowie gegebenenfalls an eingebauten, innerhalb einer Polyetherkette vorliegenden Ethylenoxideinheiten $-CH_2-CH_{-2}-O$ aufweisen, wobei der Gehalt an Sulfonat-und/oder Carboxylatgruppen bei 2 bis 300 Milliäquivalenten pro 100 g Feststoff und der Gehalt an den genannten Ethylenoxideinheiten bei 0 bis 25 Gew.-%, bezogen auf Feststoff liegt, dadurch gekennzeichnet, daß die Polyisocyanat-Additionsprodukte innerhalb der Polymerkette eingebaute Segnente der allgemeinen Formel

-NH-CO-N-CO-R
|

aufweisen, wobei

R einen gesättigten oder ungesättigten aliphatischen Kohlenwasserstoffrest mit bis zu 35 Kohlenstoffatomen, einen aromatischen Kohlenwasserstoffrest mit 6 bis 10 Kohlenstoffatomen, einen

araliphatischen Kohlenwasserstoffrest mit 7 bis 10 Kohlenstoffatomen, Chlormethyl, 4-Dimethylaminophenyl oder einen Rest L-M- bezeichnet, bei dem - M- für eine Einfachbindung, $-CH_2-$, $CH_2-CH_2-$, -CH = CH-

oder 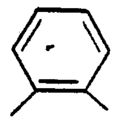 steht und L eine Estergruppe $T-\underset{\overset{\|}{O}}{C}-$

eines einwertigen Alkohols und Z = Aminrest, oder wobei, bei Vorliegen von mehreren Reste im gleichen Molekül, gleichzeitig unterschiedliche, der genannten Definition entsprechende Reste R vorliegen können,

wobei die Gesamtmenge der eingebauten acylierten Harnstoffgruppen der genannten Formel einem Gehalt des Polyisocyanat-Additionsprodukts an Struktureinheiten der Formel

$$\text{-NH-CO-}\underset{|}{\text{N}}\text{-CO-}$$

von 0,1 bis 20 Gew.-%, bezogen auf Feststoff, entspricht.

2. Verfahren zur Herstellung von wäßrigen Lösungen oder Dispersionen gemäß Anspruch 1 durch Umsetzung von

a) organischen Polyisocyanaten, gegebenenfalls unter Mitverwendung von organischen Monoisocyanaten, mit

b) Verbindungen mit mindestens zwei gegenüber Isocyanatgruppen reaktionsfähigen Gruppen, gegebenenfalls unter Mitverwendung von entsprechenden monofunktionellen Verbindungen, gegebenenfalls unter Mitverwendung bzw in Anwesenheit von

c) Hilfs- und Zusatzmitteln,

wobei als Aufbaukomponenten a) und/oder b) Sulfonat-und/oder Carboxylatgruppen oder in derartige Gruppen überführbare Gruppen aufweisende Aufbaukomponenten mitverwendet werden, wobei die zumindest teilweise Überführung in Salzgruppen der genannten Art während oder anschließend an die Polyadditionsreaktion erfolgt, und gegebenenfalls unter Mitverwendung von Aufbaukomponenten a) und/oder b), welche innerhalb einer Polyetherkette vorliegende Ethylenoxideinheiten aufweisen, wobei die Gesamtmenge derartiger hydrophiler Aufbaukomponenten so bemessen wird, daß in dem Polyisocyanat-Additionsprodukt eine die Löslichkeit oder Dispergierbarkeit gewährleistende Menge an Carboxylat-und/oder Sulfonatgruppen von 2 bis 300 Milliäquivalenten pro 100 g Feststoff und gegebenenfalls an Ethylenoxideinheiten der genannten Art von 0 bis 25 Gew.-% vorliegt, und Überführung des so hergestellten Polyisocyanat-Additionsprodukts in eine wäßrige Lösung oder Dispersion während oder im Anschluß an die Additionsreaktion, dadurch gekennzeichnet, daß man als Aufbaukomponenten a) und/oder b) zumindest anteilig Acylharnstoffgruppen der Formel

$$\text{NH-CO-}\underset{|}{\text{N}}\text{-CO-R}$$

aufweisende Verbindungen (mit) verwendet, deren Menge so bemessen wird, daß in dem Polyisocyanat-Additionsprodukt 0,1 bis 20 Gew.-%, bezogen auf Feststoff, an Acylharnstoffgruppen bildenden Struktureinheiten der Formel

$$\text{NH-CO-}\underset{|}{\text{N}}\text{-CO-R}$$

vorliegen.

3. Ausführungsform des Verfahrens gemäß Anspruch 2, dadurch gekennzeichnet, daß man die Löslichkeit oder Dispergierbarkeit der Polyisocyanat-Additionsprodukte in Wasser zumindest teilweise durch Einbau von Carboxylatgruppen sicherstellt, wobei man aus den Aufbaukomponenten a) und b), sowie gegebenenfalls den Hilfs- und Zusatzmitteln c) ein endständige Hydroxylgruppen aufweisendes Polyisocyanat-Additionsprodukt herstellt und dieses anschließend mit cyclischen Carbonsäureanhydriden unter ringöffnender Bildung von Carboxylgruppen zur Reaktion bringt und die so eingebauten Carboxylgruppen vor oder während der Lösung oder Dispergierung des Polyisocyanat-Additionsprodukts in Wasser in die Salzform überführt.

4. Verwendung der Lösungen oder Dispersionen gemäß Anspruch 1 als Beschichtungsmittel für flexible oder nicht-flexible Substrate.

5. Verwendung der Lösungen oder Dispersionen gemäß Anspruch 1 als Leimungsmittel für Papier bzw. zur Herstellung von Leimungsmitteln für Papier.

**Claims**

1. Aqueous solutions or dispersions of polyisocyanate addition products which have a content of incorporated sulfonate and/or carboxyl groups and, optionally, of incorporated ethylene oxide units $-CH_2-CH_2-O$ within a polyether chain guaranteeing their solubility or dispersibility in water, the content of sulfonate and/or carboxylate groups being fom 2 to 300 milliequivalents per 100 g solids and the content of the ethylene oxide units mentioned being from 0 to 25 % by weight, based on solids, characterized in that the polyisocyanate addition products comprise segments incorporated within the polymer chain which correspond to the following general formula

-NH-CO-N-CO-R
|

in which
R is a saturated or unsaturated aliphatic hydrocarbon radical containing up to 35 carbon atoms, an aromatic hydrocarbon radical containing from 6 to 10 carbon atoms, an araliphatic hydrocarbon radical containing from 7 to 10 carbon atoms, chloromethyl, 4-dimethylaminophenyl or a radical L-M-, where -M- is a single bond, -CH-, $-CH_2-CH_2-$,

-CH=CH- or 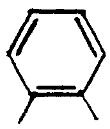 and L is an ester group T-C(=O)- or an amide group Z-C(=O)- with T = residue of a monohydric alcohol and

Z = an amine radical,

or, where several radical are present in the same molecule, different radicals R corresponding to the above definition may be present at the same time,

the total quantity of incorporated acylated urea groups having the above formula corresponding to a content in the polyisocyanate addition product of structural units having the formula

-NH-CON-CO-
|

of from 0.1 to 20 % by weight, based on solids.

2. A process for the production of aqueous solutions or dispersions of the type claimed in claim 1 by reaction of

a) organic polyisocyanates, optionally using organic monoisocyanates, with

b) compounds containing at least two isocyanate-reactive groups, optionally using corresponding monofunctional compounds, optionally using or rather in the presence of

c) auxiliaries and additives,

the synthesis components a) and/or b) being synthesis components containing sulfonate and/or carboxylate groups or groups convertible into such groups, the at least partial conversion into salt groups of the type mentioned taking place during or after the polyaddition reaction and optionally using synthesis components a) and/or b) which contain ethylene oxide units present within a polyether chain, the total quantity of such hydrophilic synthesis components being gauged in such a way that the polyisocyanate addition product has a content - guaranteeing its solubility of dispersibility - of carboxylate and/or sulfonate groups of from 2 to 300 milliequivalents per 100 g solids and, optionally, of ethylene oxide units of the type mentioned of from 0 to 25 % by weight, and conversion of the polyisocyanate addition product thus prepared into an aqueous solution or dispersion during or after the addition reaction, characterized in that compounds containing at least some acylurea groups corresponding to the formula

-NH-CO-N-CO-R
|

are (co)used as synthesis components a) and/or b) in such a quantity that the polyisocyanate addition product contains from 0.1 to 20 % by weight, based on solids, of structural units forming acyl urea groups and corresponding to the formula

-NH-CO-N-CO-
|

3. An embodiment of the process claimed in claim 2, characterized in that the solubility or dispersibility of

the polyisocyanate addition products in water is at least partly guaranteed by incorporation of carboxylate groups, a hydroxyl-terminated polyisocyanate addition product being prepared from the synthesis components a) and b) and, optionally, the auxiliaries and additives c) and being subsequently reacted with cyclic carboxylic anhydrides with ring-opening formation of carboxyl groups and the carboxyl groups thus incorporated being converted into the salt form before or during the dissolution or dispersion of the polyisocyanate addition product in water.

4. The use of the solutions or dispersions claimed in claim 1 as coating materials for flexible or non-flexible substrates.

5. The use of the solutions or dispersions claimed in claim 1 as sizing agents for paper or for the production of sizing agents for paper.

**Revendications**

1. Solutions ou dispersions aqueuses de produits de polyaddition de polyisocyanate qui présentent une teneur en des groupes sulfonates et/ou carboxylates incorporés garantissant leur solubilité ou dispersabilité dans l'eau et qui présentent éventuellement des motifs oxyéthylènes $-CH_2-CH_2-O$ incorporés, présents à l'intérieur d'une chaîne polyéther, la teneur en des groupes sulfonates et/ou carboxylates se situant à 2 jusqu'à 300 milliéquivalents pour 100 g de matière sèche et la teneur en des motifs oxyéthylènes cités se situant à 0 jusqu'à 25 % en poids, par rapport à la matière sèche, solutions ou dispersions caractérisées en ce que les produits d'addition de polyisocyanates présentent, incorporés à l'intérieur de la chaîne polymère, des segments de formule générale

-NH-CO-N-CO-R
        |

dans laquelle
R représente un reste d'hydrocarbure aliphatique saturé ou insaturé comportant jusqu'à 35 atomes de carbone, un reste d'hydrocarbure aromatique comportant 6 à 10 atomes de carbone, un reste d'hydrocarbure araliphatique ayant 7 à 10 atomes de carbone, un groupe chlorométhyle, 4-diméthylaminophényle ou un reste L-M-, dans lequel -M- représente une liaison simple, un groupe $-CH_2-$, un groupe

$-CH_2-CH_2$, un groupe $-CH = CH-$ ou 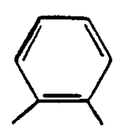, et L représente un groupe ester $T-\underset{\underset{O}{\|}}{C}-$ ou un groupe amide $Z-\underset{\underset{O}{\|}}{C}-$, avec T représentant le reste d'un monoalcool et Z un reste d'amine ou, en cas de présence de plusieurs restes dans la même molécule, il peut y avoir simultanément des restes R différents répondant à la définition citée, la quantité totale des groupes urée acylée incorporés, de formule citée, correspondant à une teneur du produit d'addition de polyisocyanate en des motifs structurés de formule

-NH-CO-N-CO-
        |

de 0,1 à 20 % en poids, par rapport à la matière sèche.

2. Procédé pour préparer des solutions ou dispersions aqueuses selon la revendication 1, par réaction

a) de polyisocyanates organiques, éventuellement avec co-utilisation de monoisocyanates organiques, avec

b) des composés comportant au moins deux groupes capables de réagir avec les groupes isocyanates, éventuellement avec co-utilisation de composés monofonctionnels correspondants, éventuellement avec co-utilisation ou en présence

c) d'adjuvants et additifs,

selon lequel on peut utiliser comme composants a) et/ou b) des composants présentant des groupes sulfonates et/ou des groupes carboxylates ou des groupes pouvant être transformés en de tels groupes, la transformation au moins partielle en des groupes salins de la nature citée ayant lieu pendant ou après la réaction de polyaddition, et éventuellement avec co-utilisation de composants a) et/ou b) qui présentent des motifs oxyéthylènes présents à l'intérieur d'une chaîne polyéther, la quantité totale de tels composants hydrophiles étant mesurée de façon à ce qu'il y ait dans le produit d'addition de polyisocyanate une quantité des groupes carboxylates et/ou sulfonates, garantissant la solubilité ou la dispersabilité, de 2 à 300

milliéquivalents pour 100 g de matière sèche et éventuellement des motifs oxyéthylènes de nature citée présents en une quantité de 0 à 25 % en poids, et transformation du produit d'addition de polyisocyanate ainsi préparé en une solution ou dispersion aqueuse pendant ou après la réaction d'addition, procédé caractérisé en ce qu'on utilise ou co-utilise, comme composants a) et/ou b), des composés présentant au moins en partie des groupes acylurée de formule

NH-CO-N-CO-R
|

dont la quantité est telle que, dans le produit d'addition de polyisocyanate, il y ait 0,1 à 20 % en poids, par rapport à la matière sèche, de motifs structurels de formule

-NH-CO-N-CO-
|

formant des groupes acylurée.

3. Forme de réalisation du procédé selon la revendication 2, caractérisée en ce qu'on garantit la solubilité ou la dispersabilité dans l'eau des produits d'addition de polyisocyanate, au moins partiellement, par l'incorporation de groupes carboxylates, en préparant à partir des composants a) et b) de synthèse, ainsi qu'éventuellement des adjuvants et additifs c), un produit d'addition de polyisocyanate présentant des groupes hydroxyles terminaux et l'on fait réagir celui-ci ensuite avec des anhydrides d'acides carboxyliques cycliques, avec formation, par ouverture de cycles, le groupe carboxyle et l'on transforme les groupes carboxyles ainsi introduits, avant ou pendant la dissolution ou l'opération de dispersion du produit d'addition de polyisocyanate dans l'eau, pour faire repasser ces groupes carboxyles sous forme de sel.

4. Utilisation des solutions ou dispersions selon la revendication 1 comme produits d'enduction de substrats flexibles ou non flexibles.

5. Utilisation des solutions ou dispersions selon la revendication 1 comme produits de collage du papier ou pour la préparation de produits de collage du papier.